# FASCICULE DE BREVET EUROPEEN

(11) **EP 1 375 545 B1**
(45) Date de publication et mention de la délivrance du brevet: **29.06.2016**
(21) Numéro de dépôt: 03020852.4
(22) Date de dépôt: 04.11.1998
(51) Int. Cl.: C08G 18/02, C08G 18/18, C08G 18/20, C08G 18/38, B01J 31/02

(54) **CATALYSEUR ET PROCÉDÉ DE TRIMERISATION D'ISOCYANATES**
KATALYSATOR UND VERFAHREN FÜR DIE TRIMERISATION VON ISOCYANATEN
CATALYST AND PROCESS FOR THE TRIMERISATION OF ISOCYANATES

(30) Priorité: 04.11.1997 FR 9713855; 04.11.1997 FR 9713856
(43) Date de publication de la demande: 02.01.2004
(62) Demande divisionnaire de: 98954515.7
(73) Titulaire: Vencorex France, 69800 Saint-Priest (FR)
(72) Inventeur: Revelant, Denis, 69740 Genas (FR); Bernard, Jean-Marie, Saint-Laurent d'Agny 69440 Mornant (FR)
(74) Mandataire: Colombet, Alain André

(56) Documents cités:
- EP-A- 0 003 765
- EP-A- 0 351 873
- US-A- 4 040 992

## Description

L'invention a pour objet un catalyseur utile pour la cyclotrimérisation catalytique d'isocyanates monomères en polyisocyanates (poly)isocyanurates, ainsi qu'un procédé de préparation de polyisocyanates (poly)isocyanurates par cyclotrimérisation catalytique d'isocyanates monomères.

Il est connu de préparer des trimères d'isocyanates par trimérisation catalytique d'un isocyanate en mettant en oeuvre un catalyseur à base d'un hydroxyde d'ammonium quaternaire.

Ainsi, EP-003 765 décrit la cyclotrimérisation partielle de l'isophorone diisocyanate (IPDI ou 1-isocyanato-3,3,5-triméthyl-5-isocyanatométhyl-cyclohexane) en mettant en oeuvre en tant que catalyseur un hydroxyde d'un hydroxyalkylammonium quaternaire.

D'une manière générale, les catalyseurs à base d'un hydroxyde d'ammonium quaternaire ont une réactivité très forte qui rend difficile le contrôle de la réaction de trimérisation, en particulier lorsque l'isocyanate de départ est un isocyanate aliphatique ou cycloaliphatique.

En outre, le contrôle de la réaction est rendu plus difficile encore du fait des variations possibles de la teneur en chlore hydrolysable de l'isocyanate de départ, provenant du procédé de phosgènation utilisé pour la synthèse de ces isocyanates.

On sait ainsi que l'efficacité du catalyseur diminue lorsque la teneur en chlore hydrolysable contenue dans l'IPDI augmente.

La teneur en chlore hydrolysable influe par ailleurs sur la coloration du brut réactionnel qui augmente d'autant que la quantité de chlore est élevée.

US 4,040,992 décrit par ailleurs des catalyseurs de trimérisation catalytique d'isocyanates de type sels d'ammonium quaternaires dont l'anion est représenté par OH⁻, ou la formule ⁻OOC-(O)ₐ-Y dans laquelle Y est choisi parmi:
- un atome d'hydrogène,
- un groupe alkyle ayant de 1 à 20 atomes de carbone,
- un groupe alkényle ayant de 2 à 15 atomes de carbone,
- un groupe cycloalkyle ayant de 3 à 6 atomes de carbone,
- un groupe phényle,
- un groupe alkylphényle ayant de 1 à 9 atomes de carbone dans le reste alkyle ou dans les groupes liés au noyau phényle,
- un groupe benzyle,
- un groupe carbamate,
- un groupe alkylbenzyle ayant de 1 à 9 atomes de carbone dans le reste alkyle ou dans les groupes liés au noyau benzyle, et
- un groupe CH(_{3-b})Z(_{b}) dans lequel b est un nombre entier de 1 à 3 et Z est OH, CN, CI, un groupe alkoxy de 1 à 5 atomes de carbone, ou un groupe phényle ou méthoxyphényle, ou
Z est (CH₂)_{d}COOR dans lequel d est un nombre entier de 0 à 4 et R est un atome d'hydrogène ou un groupe alkyle ayant jusqu'à 20 atomes de carbone ;
et a est égal à zéro ou 1.

Cependant, les anions illustrés dans ce brevet sont tous des anions dérivés d'acide alkylcarboxylique. De manière générale, les catalyseurs décrits dans ce document ne permettent pas d'aboutir au but recherché.

Le but de l'invention est de fournir un catalyseur de cyclotrimérisation d'isocyanates, notamment de diisocyanates qui permette un contrôle de la réaction, tout en ayant un taux de transformation acceptable, qui ne soit pas dépendant de façon substantielle de la teneur en chlore hydrolysable, de l'isocyanate de départ et permette d'obtenir un produit dont la coloration n'est pas marquée de façon importante.

Le but de l'invention est également de proposer un procédé pour la trimérisation catalytique d'isocyanates, notamment pour la cyclotrimérisation partielle de diisocyanates, qui soit aisé à contrôler, ne dépende pas ou peu de la teneur en chlore hydrolysable présent dans l'isocyanate monomère et qui diminue autant que possible la coloration du brut réactionnel.

On connait par ailleurs des catalyseurs de type ionique dont le contre-anion est l'anion hydrogénocarbonate permettraient d'aboutir au but recherché.

Ces catalyseurs sont formés d'un cation mono-atomique ou polyatomique volumineux, soit en tant que tel, soit sous la forme d'un complexe formé avec un agent complexant, notamment de type cryptant.

On décrit ici l'utilisation en tant que catalyseur de réaction de cyclotrimérisation d'isocyanates d'un hydrogénocarbonate d'un cation qui, soit en tant que tel, soit sous forme complexée avec un agent complexant, a un rayon ionique ou moléculaire moyen supérieur à 1 Å, de préférence supérieur à 1,5 Å, tel que défini dans les tables de M. Shannon et Prewitt dans Acta Cris., 1969, vol. B25, page 925 et qui est au moins partiellement soluble dans le milieu réactionnel.

Avantageusement, le cation est choisi parmi les cations de métaux alcalins volumineux, notamment le rubidium et le césium.

Le cation peut également consister en un cation de métal alcalin léger, sous forme complexée. On peut citer notamment les cations sodium et potassium complexés par des éther couronnes.

Le cation peut également consister en une espèce moléculaire, dans laquelle tous les atomes sont liés par des liaisons covalentes.

On citera à ce titre les cations de type "onium" dont les espèces représentatives sont les phosphoniums, sulfoniums et ammoniums quaternaires.

On préfère en particulier les hydrogénocarbonates des cations de formule I suivante : 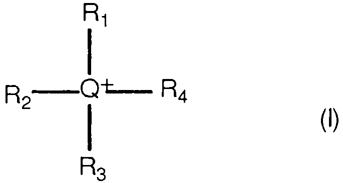 dans laquelle
Q représente un atome d'azote, de phosphore ou de soufre ; et
R₁, R₂, R₃ et R₄ identiques ou différents désignent des groupes alkyle, éventuellement hydroxylés, ayant 1 à 20 atomes de carbone, des restes cycloalkyle ayant de 4 à 15 atomes de carbone, éventuellement substitués avec des groupes hydroxyle, des restes aralkyle ayant 7 à 15 atomes de carbone, éventuellement substitués avec des groupes hydroxyle ou des restes aryle ayant 6 à 15 atomes de carbone, éventuellement substitués avec des groupes hydroxyle ou bien lorsque Q est N, deux des restes R₁, R₂, R₃ ou R₄ peuvent aussi former avec l'atome d'azote et, le cas échéant, avec un hétéro-atome notamment d'oxygène ou d'azote, un noyau hétérocyclique ayant 4 à 6 atomes de carbone, ou bien lorsque Q est N, les restes R₁, R₂ et R₃ représentent chacun des restes éthylène qui forment en association avec l'atome quaternaire d'azote et un autre atome tertiaire d'azote, un squelette de triéthylènediamine bicyclique,
ou l'un de R₁ à R₄ représente un groupe 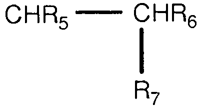 dans lequel R₅, R₆ et R₇ identiques ou différents représentent l'hydrogène, un groupe OH, un groupe alkyle ayant 1 à 12 atomes de carbone, un groupe cycloalkyle ayant 5 à 7 atomes de carbone, un groupe alkényle ayant de 2 à 15 atomes de carbone, un groupe alkynyle ayant de 3 à 6 atomes de carbone, un groupe hydroxyalkyle ayant de 1 à 9 atomes de carbone, un groupe aralkyle ayant de 7 à 10 atomes de carbone, un groupe aryle ayant de 6 à 10 atomes de carbone ou un groupe R₈-O-(CH₂)ₙ dans lequel R₈ est l'hydrogène, un reste alkyle ayant de 1 à 12 atomes de carbone, un reste cycloalkyle ayant de 4 à 10 atomes de carbone, un reste aralkyle ayant de 7 à 10 atomes de carbone ou un reste aryle ayant de 6 à 10 atomes de carbone ; et n est un nombre entier allant de 1 à 6 ; R₇ pouvant en outre également représenter un groupe OCOR₉, R₉ étant un groupe alkyle en C₁-C₆, de préférence en C₁-C₄, plus particulièrement le groupe méthyle.

Le cation est plus particulièrement représenté par la formule générale II suivante : 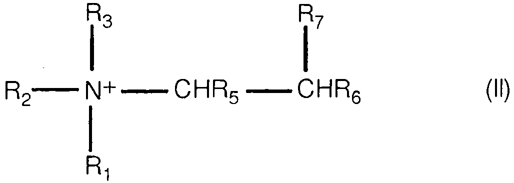 dans laquelle :
* R₁, R₂ et R₃ représentent des restes identiques ou différents et désignent des groupes alkyle, éventuellement hydroxylés, ayant 1 à 20 atomes de carbone, des restes cycloalkyle ayant de 4 à 15 atomes de carbone, éventuellement substitués avec des groupes hydroxyle, des restes aralkyle ayant 7 à 15 atomes de carbone, éventuellement substitués avec des groupes hydroxyle ou des restes aryle ayant 6 à 15 atomes de carbone, éventuellement substitués avec des groupes hydroxyle, deux des restes R₁, R₂ ou R₃ pouvant aussi former avec l'atome d'azote et, le cas échéant, avec un hétéro-atome d'oxygène ou un autre hétéro-atome d'azote un noyau hétérocyclique ayant 4 à 6 atomes de carbone, ou bien les restes R₁, R₂ et R₃ représentant chacun des restes éthylène qui forment en association avec l'atome quaternaire d'azote et un autre atome tertiaire d'azote, un squelette de triéthylènediamine bicyclique, et
* R₅, R₆ et R₇ identiques ou différents représentent l'hydrogène, un groupe OH, un groupe alkyle ayant 1 à 12 atomes de carbone, un groupe cycloalkyle ayant 5 à 7 atomes de carbone, un groupe alkényle ayant de 2 à 15 atomes de carbone, un groupe alkynyle ayant de 3 à 6 atomes de carbone, un groupe hydroxyalkyle ayant de 1 à 9 atomes de carbone, un groupe aralkyle ayant de 7 à 10 atomes de carbone, un groupe aryle ayant de 6 à 10 atomes de carbone ou un groupe R₈-O-(CH₂)ₙ dans lequel R₈ est l'hydrogène, un reste alkyle ayant de 1 à 12 atomes de carbone, un reste cycloalkyle ayant de 4 à 10 atomes de carbone, un reste aralkyle ayant de 7 à 10 atomes de carbone ou un reste aryle ayant de 6 à 10 atomes de carbone ; et n est un nombre entier allant de 1 à 6 ; R₇ pouvant en outre également représenter un groupe OCOR₉, R₉ étant un groupe alkyle en C₁-C₆, de préférence en C₁-C₄, plus particulièrement le groupe méthyle.

Un groupe de cations d'ammonium quaternaire préféré est constitué par les composés dans lesquels :
- R₁, R₂ et R₃ identiques ou différents représentent un groupe alkyle linéaire en C₁-C₄, de préférence alkyle en C₁-C₃, plus particulièrement alkyle en C₁-C₂, et de préférence méthyle,
- R₅ représente H, OH, le groupe méthyle ou le groupe hydroxyméthyle,
- R₆ représente H, OH, le groupe méthyle ou le groupe hydroxyméthyle,
- R₇ représente H, OH, le groupe méthyle, le groupe hydroxyméthyle ou le groupe acétyle.

Un autre groupe de cations d'ammonium quaternaire préféré est constitué par les composés dans lesquels :
- R₁, R₂ et R₃ identiques ou différents représentent un groupe alkyle en C₁-C₄, de préférence alkyle en C₁-C₃, plus particulièrement alkyle en C₁-C₂, et de préférence méthyle,
- R₅ représente H ou un groupe alkyle en C₁-C₄,
- R₆ représente H, OH ou un groupe alkyle en C₁-C₄,
- R₇ représente H, OH, un groupe alkyle en C₁-C₄ ou le groupe acétyle,
sans que le total des atomes de carbone de R₁ à R₇ excède 8, de préférence 6.

Plus avantageusement encore, on préfère les cations d'ammonium quaternaire dans lesquels au moins un, de préférence deux et de façon plus préférée les trois groupes de R₁ à R₃ représentent le groupe méthyle, R₅, R₆ et R₇ étant tels que définis ci-dessus, et de préférence un seul de R₅ à R₇ étant OH.

Un autre groupe de cations d'ammonium quaternaire préférés est celui dans lequel R₁ à R₃ représentent un groupe alkyle en C₁-C₄, un groupe hydroxyalkyle en C₁-C₄, et R₅ à R₇ représentent H ou OH, lesdits composés comportant avantageusement un seul groupe OH en position omega par rapport à l'atome d'azote central.

Un catalyseur plus particulièrement préféré est l'hydrogénocarbonate de choline, notamment lorsque l'isocyanate que l'on veut cyclotrimériser est un diisocyanate cycloaliphatique, tels que le NBDI, l'IPDI ou le H₁₂MDI, ou un mélange d'un diisocyanate cycloaliphatique tel que mentionné précédemment et d'un diisocyanate aliphatique à chaîne linéaire ou ramifiée, notamment le HDI.

On peut également citer l'hydrogénocarbonate de tétraméthyle phosphonium ou sulfonium ainsi que l'hydrogénocarbonate de tétraphényle phosphonium ou sulfonium.

Les catalyseurs selon l'invention sont des composés connus. Ils peuvent être obtenus notamment dans les cas des ammoniums quaternaires, lorsque R₇ représente OH par réaction d'une amine tertiaire de formule générale III : 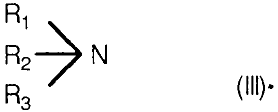 dans laquelle R₁ à R₃ sont tels que définis ci-dessus avec un époxyde de formule générale IV : 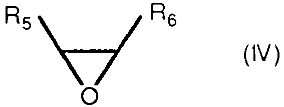 dans laquelle R₄ et R₅ sont tels que définis ci-dessus, en présence de CO₂ et d'H₂O.

Dans le cas des esters, l'ammonium quaternaire hydroxylé peut être estérifié à l'aide d'un acylimidazole par exemple. Dans le cas des éthers, on travaillera avec un excès d'époxy.

Le catalyseur selon l'invention peut être utilisé pour la cyclotrimérisation de tout type d'isocyanates, ou mélange d'isocyanates qu'ils soient aliphatiques, cycloaliphatiques ou aromatiques, y compris les prépolymères ayant des groupes isocyanates terminaux, notamment ceux décrits dans US 5,115,071. Il peut ainsi être utilisé pour la trimérisation d'isocyanates en présence de divers diols, triols et autres polyols dont les poids moléculaires se situent dans une large gamme, y compris les polyols et aminopolyols comprenant des groupes polyéther et polyester, employés pour la production de résines polyuréthanes et polyisocyanurates.

Il est avantageusement utilisé pour la cyclotrimérisation de l'IPDI (isophorone diisocyanate ou 1-isocyanato-3,3,5-triméthyl-5-isocyanato méthyl cyclohexane), du NBDI (norbornane diisocyanate ou 2,5(6)-diisocyanatométhyl-bicyclo[2,2,1]heptane) et de l'H₁₂MDI (diisocyanate de 4,4'-dicyclohexylméthanediyle), seuls ou en mélange avec d'autres diisocyanates, notamment à chaîne aliphatique linéaire, tels que l'HDI (hexaméthylène diisocyanate).

Avantageusement, on ajoute le catalyseur suivant l'invention en une quantité comprise entre 300 et 5000 ppm, de préférence entre 500 et 3500 ppm par rapport à la quantité totale des isocyanates de départ.

Le catalyseur est ajouté au milieu réactionnel sous agitation, de préférence en l'absence de solvant. On laisse la réaction se dérouler pendant une durée variant entre 1 h et 4 h, de préférence environ une heure et demie.

La réaction est conduite avantageusement à une température comprise entre la température ambiante et 120°C de préférence entre 40 et 100°C, avantageusement sous atmosphère neutre.

L'invention a également pour objet l'utilisation du catalyseur sous une forme solide tel que par exemple obtenue par dépôt du catalyseur sur un minéral tel que la silice, ou par fixation covalente sur une résine.

L'invention a également pour objet un procédé de trimérisation catalytique d'isocyanates, notamment de diisocyanates ou de mélange d'isocyanates, notamment de diisocyanates, caractérisé en ce que l'on utilise en tant que catalyseur de trimérisation, un hydrogénocarbonate d'ammonium quaternaire tel que défini ci-dessus.

On a découvert que la réaction de cyclotrimérisation pouvait être améliorée de manière substantielle lorsque l'on utilise l'imidazole ou un de ses dérivés comme co-catalyseur d'un système catalytique à base d'un sel d'ammonium quaternaire.

L'invention a donc également pour objet un procédé de préparation de polyisocyanates isocyanurates par cyclotrimérisation catalytique d'isocyanates dans lequel on utilise un système catalytique comprenant en tant que catalyseur un catalyseur de cyclotrimérisation à base d'un sel d'ammonium quaternaire et comme co-catalyseur l'imidazole ou un de ses dérivés.

Par dérivés d'imidazole, on entend tout composé comprenant le cycle de l'imidazole et portant un ou plusieurs substituants usuels en chimie organique.

Les dérivés de l'imidazole répondent notamment à la formule générale V : 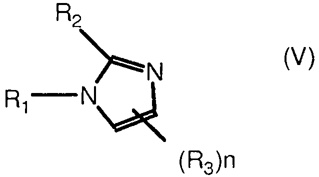 dans laquelle R₁, R₂ et R₃ identiques ou différents sont choisis parmi H, OH, SH, un groupe alkyle en C₁-C₄, hydroxyalkyle en C₁-C₄, aminoalkyle en C₁-C₄, alkylamino en C₁-C₄, dialkylamino (chaque groupe alkyle ayant de 1 à 4 atomes de carbone), alkylthio en C₁-C₄, halogénoalkyle en C₁-C₄, cycloalkyle en C₃-C₈, aryle en C₅-C₁₀, (aryl en C₅-C₁₀) - alkyle en C₁-C₄ ; (alkyl en C₁-C₄) - aryle en C₅-C₁₀, hétérocyclique dont l'hétérocycle comprend de 2 à 10 atomes de carbone et de 1 à 4 hétéroatomes identiques ou différents choisis parmi O, S et N et le groupe NR₄, R₄ étant notamment alkyle en C₁-C₄ ou cycloalkyle en C₃-C₈ et n est égal à 0, 1 ou 2.

Avantageusement, le catalyseur à base d'un sel d'ammonium quaternaire est tel que défini ci-dessus.

Toutefois, on peut utiliser tout type de catalyseur de cyclotrimérisation connu de type sel d'ammonium quaternaire.

On peut citer notamment les sels des composés de formule générale suivante : 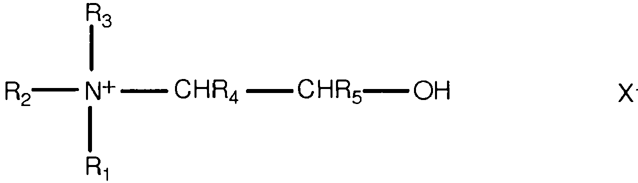 dans laquelle
R₁, R₂ et R₃ représentent des restes identiques ou différents et désignent des groupes alkyle, éventuellement hydroxylés, ayant 1 à 20 atomes de carbone, des restes cycloalkyle ayant de 4 à 15 atomes de carbone, éventuellement substitués avec des groupes hydroxyle, des restes aralkyle ayant 7 à 15 atomes de carbone, éventuellement substitués avec des groupes hydroxyle ou des restes aryle ayant 6 à 15 atomes de carbone, éventuellement substitués avec des groupes hydroxyle, deux des restes R₁, R₂ ou R₃ pouvant aussi former avec l'atome d'azote et, le cas échéant, avec un hétéro-atome d'oxygène ou un autre hétéro-atome d'azote un noyau hétérocyclique ayant 4 à 6 atomes de carbone, ou bien les restes R₁, R₂ et R₃ représentant chacun des restes éthylène qui forment en association avec l'atome quaternaire d'azote et un autre atome tertiaire d'azote, un squelette de triéthylènediamine bicyclique, R₄ et R₅ identiques ou différents représentent l'hydrogène et/ou un groupe alkyle ayant 1 à 12 atomes de carbone, un groupe cycloalkyle ayant 5 à 7 atomes de carbone, un groupe alkényle ayant de 2 à 15 atomes de carbone, un groupe alkynyle ayant de 3 à 6 atomes de carbone, un groupe hydroxyalkyle ayant de 1 à 9 atomes de carbone, un groupe aralkyle ayant de 7 à 10 atomes de carbone, un groupe aryle ayant de 6 à 10 atomes de carbone ou un groupe R₆-O-(CH₂)ₙ dans lequel R₆ est l'hydrogène, un reste alkyle ayant de 1 à 12 atomes de carbone, un reste cycloalkyle ayant de 4 à 10 atomes de carbone, un reste aralkyle ayant de 7 à 10 atomes de carbone ou un reste aryle ayant de 6 à 10 atomes de carbone ; et
n est un nombre entier ayant une valeur de 1 à 6; et
X⁻ représente un anion, avantageusement choisi parmi OH⁻, et les anions de formule ⁻OOC-(O)ₐ-Y dans laquelle Y est choisi parmi
   un atome d'hydrogène,
   un groupe alkyle ayant de 1 à 20 atomes de carbone,
   un groupe alkényle ayant de 2 à 15 atomes de carbone,
   un groupe cycloalkyle ayant de 3 à 6 atomes de carbone,
   un groupe phényle,
   un groupe alkylphényle ayant de 1 à 9 atomes de carbone dans le reste alkyle ou dans les groupes liés au noyau phényle,
   un groupe benzyle,
   un groupe carbamate,
   un groupe alkylbenzyle ayant de 1 à 9 atomes de carbone dans le reste alkyle ou dans les groupes liés au noyau benzyle, et
   un groupe CH_{(3-b)}Z_{(b)} dans lequel b est un nombre entier de 1 à 3 et Z est OH, CN, CI, un groupe alkoxy de 1 à 5 atomes de carbone, ou un groupe phényle ou méthoxyphényle, ou
   Z est (CH₂)_{d}COOR dans lequel d est un nombre entier de 0 à 4 et R est un atome d'hydrogène ou un groupe alkyle ayant jusqu'à 20 atomes de carbone ;
   et a est égal à zéro ou 1.
X représente de préférence les anions carboxylates et l'anion HCO₃⁻.

Les composés de formule générale ci-dessus sont décrits dans EP 0 003 765 et US 4,040,992.

Lorsque l'isocyanate que l'on veut cyclotrimériser est un diisocyanate cycloaliphatique, tels que le NBDI, l'IPDI ou le H₁₂MDI, ou un mélange d'un diisocyanate cycloaliphatique et d'un diisocyanate aliphatique à chaîne linéaire, notamment le HDI, on préfère utiliser comme catalyseur un hydrogénocarbonate d'un ammonium quaternaire, tel que défini précédemment, notamment l'hydrogénocarbonate de choline.

La mise en oeuvre d'un système catalytique comprenant un sel d'ammonium quaternaire et de l'imidazole ou dérivés, conformément à la présente invention, permet d'aboutir à une augmentation de la réactivité des isocyanates, en particulier des isocyanates cycloaliphatiques, le cas échéant, en mélange avec des isocyanates aliphatiques à chaîne linéaire, laquelle réactivité peut être contrôlée de façon efficace sans dépendre de manière substantielle de la teneur en chlore hydrolysable de(s) (l')isocyanate(s) monomère(s) de départ.

En outre, le mélange réactionnel obtenu à l'issue de la réaction de cyclotrimérisation, le cas échéant, partielle, présente une coloration fortement atténuée par rapport à un mélange réactionnel obtenu en l'absence d'imidazole.

Par ailleurs, l'emploi d'imidazole en tant que co-catalyseur d'une réaction de cyclotrimérisation dans laquelle le catalyseur est un sel d'ammonium quaternaire, résulte en la formation d'une quantité substantielle de dimères à cycle uretdione de(s) (l')isocyanate(s) de départ, susceptible d'améliorer les propriétés du mélange résultant, notamment de diminuer la viscosité des polyisocyanates isocyanurates.

Avantageusement, on ajoute sous agitation l'imidazole au(x) monomère(s) d'isocyanate que l'on souhaite polymériser, de préférence en l'absence de solvant et on continue à agiter jusqu'à obtention d'un mélange homogène.

Le catalyseur est ajouté pendant que l'agitation est maintenue et le milieu réactionnel est chauffé.

On laisse la réaction se dérouler pendant une durée variant entre 1 h et 4 h, de préférence environ 1 heure et demie.

L'utilisation d'imidazole en tant que co-catalyseur permet par ailleurs de diminuer de manière substantielle la quantité de catalyseur nécessaire à la cyclotrimérisation de(s) (l')isocyanate(s).

Il suffit par exemple de mettre en oeuvre une quantité de catalyseur allant de 100 à 300 ppm, de préférence d'environ 200 ppm, par rapport à la quantité d'isocyanate(s) de départ, lorsque la quantité de co-catalyseur est de 400 à 800 ppm, de préférence d'environ 600 ppm, par rapport à la quantité d'isocyanate(s) de départ.

La réaction de cyclotrimérisation, notamment de cyclotrimérisation partielle est conduite à une température comprise entre la température ambiante et 120°C, avantageusement de 60 à 70°C pour l'IPDI.

L'invention a également pour objet une composition polyisocyanate (poly)isocyanurate obtenue par le procédé selon l'invention, notamment comprenant les composés suivants :
- le trimère du NBDI,
- le trimère du H₁₂MDI,
- le trimère de l'IPDI,
- les trimères mixtes NBDI/HDI, IPDI/HDI ou H₁₂MDI/HDI,
dans lesquels la proportion d'HDI peut varier de 5 à 95 % en poids.

L'invention a également pour objet une composition de polyisocyanates (poly)isocyanurates obtenue par le procédé selon l'invention, une telle composition étant caractérisée par la présence de produits de réaction entre l'isocyanate de départ et l'imidazole et entre les produits de polymérisation de ces isocyanates, notamment sous forme d'isocyanurates avec l'imidazole ou un de ses dérivés, ces produits pouvant également comprendre des groupes biuret, carbamate et/ou allophanate obtenus par réaction des groupes isocyanates avec les groupes OH présents dans le catalyseur.

Les produits obtenus peuvent ultérieurement subir une réaction chimique : dimérisation, allophanatation, biurétisation, réaction de blocage par un agent bloquant (ou masquant) soit avant, soit après distillation du monomère.

Les composés obtenus sont utilisés pour la préparation de revêtements, notamment comme constituants de base pour vernis et peintures.

Les exemples suivants illustrent l'invention.

### EXEMPLE 1 (comparatif) : Préparation d'isophorone diisocyanate trimère (IPDT).

On charge dans un réacteur de 11, 800 g d'IPDI. On agite sous courant d'argon et on porte à la température de 85°C.

Lorsque la température est stabilisée, on charge 0,56 g (0,07 % en poids) de bicarbonate de choline. On laisse la réaction se poursuivre pendant 3 heures en suivant l'évolution du taux de transformation de l'IPDI par mesure du titre en NCO (par potentiométrie).

On obtient 80 g de l'IPDT correspondant à un taux de transformation de 10 %.

### EXEMPLE 2 (comparatif) : Préparation d'isophorone diisocyanate trimère (IPDT).

On procède comme pour l'exemple 1 sauf que l'on ajoute 1,6 g (0,2 % en poids) de bicarbonate de choline et qu'on chauffe la réaction jusqu'à 60°C.

On obtient 320 g d'IPDT correspondant à un taux de transformation d'IPDI de 40 %.

### EXEMPLES 3 à 5 : Exemples comparatifs

On a par ailleurs comparé la réactivité de l'hydrogénocarbonate de choline à celle de l'hydroxyde de choline, du bisulfite de choline et du bitartrate de choline.

Les résultats des exemples 1 à 5 sont rapportés dans le tableau ci-dessous.

| Exemples | Catalyseur | [cata] * % en poids | Température de réaction (°C) | TT IPDI (%) |
|---|---|---|---|---|
| 1 | Choline bicarbonate | 0,07 | 85 | 10 |
| 2 | Choline bicarbonate | 0,2 | 60 | 40 |
| 3 | Choline hydroxyde | 0,07 | 85 | 40 |
| 4 | choline bisulfite | 0,07 | 85 | 0 |
| 5 | Choline bitartrate | 0,2 | 80 | 0 |

| | | | | |
|---|---|---|---|---|
| * Les [cata] sont calculées à partir des sels de choline à 100 %. | | | | |

Il apparaît que des différents sels de choline, seul le bicarbonate présente une activité catalytique plus faible et plus facilement contrôlable, à savoir une activité 2,8 fois moindre que celle de l'hydroxyde de choline.

### EXEMPLE 6 : Préparation d'IPDT

L'IPDI (800 g) est chargé dans un réacteur de 1l, et agité sous courant d'argon.

De l'imidazole est introduit à raison de 4 mmoles/100 g d'IPDI à température ambiante. L'agitation est maintenue et le milieu réactionnel est porté à 80°C. Lorsque la température est stabilisée, on introduit du bicarbonate de choline (0,05 % en poids). L'évolution de la réaction est suivie par mesure du taux de transformation (TT) de l'IPDI du temps par mesure du titre en NCO (potentiométrie).

La réaction est poursuivie pendant une durée d'une heure 30. Le taux de transformation de l'IPDI obtenu est de l'ordre de 70 %.

### EXEMPLE 7 : Préparation d'IPDT

On procède comme à l'exemple 6 sauf que la quantité de catalyseur introduite est de 0,028 % en poids.

La réaction est poursuivie à 80°C pendant une durée de deux heures. Le taux de transformation de l'IPDI est de 60 %.

### EXEMPLES 8 et 9 : Exemples comparatifs

On procède comme à l'exemple 6 sauf que l'on n'introduit pas d'imidazole. Les quantités de catalyseur (hydrogénocarbonate de choline) sont de 0,2 % et 0,15 % en poids.

La coloration du milieu réactionnel est évaluée suivant la méthode AFNOR NF T20605 ou ASTM D1209.84.

Afin de favoriser la réactivité et limiter le développement de la coloration, l'IPDI est redistillé avant la réaction de trimérisation.

Les résultats sont rapportés au tableau ci-dessous.

| ***Ex.*** | ***Catalyseur*** | ***Co-catalyseur*** | ***[cata] % en poids*** | ***[co-cata] mmol*/*100 g*** | ***Température de réaction en °C*** | ***TT IPDI en* %** | ***Color. Apha*** |
|---|---|---|---|---|---|---|---|
| 6 | Choline bicarbonate | Imidazole | 0,05 | 4 | 80 | 70 | 70 |
| 7 | Choline bicarbonate | Imidazole | 0,028 | 4 | 80 | 60 | 60 |
| 8 | Choline bicarbonate | Aucun | 0,2 | 0 | 80 | 50 | 140 |
| 9 | Choline bicarbonate | Aucun | 0,15 | 0 | 80 | 32 | 140 |

Le fait de redistiller l'IPDI n'amène pas d'amélioration au niveau de la coloration du brut de synthèse (140 Apha). En revanche, la cinétique de transformation est nettement plus rapide. Une baisse de 25 % de la teneur en catalyseur (exemple 9) limite le taux de transformation de l'IPDI mais reste sans effet vis à vis de la coloration.

L'ajout d'imidazole, de façon surprenante, accélère fortement la cinétique de trimérisation, même avec une teneur en catalyseur huit fois plus faible (exemple 7) tout en réduisant la coloration du brut de synthèse de moitié (60-70 Apha). De plus, la formation de trimère d'IPDI s'accompagne de la coproduction de dimère.

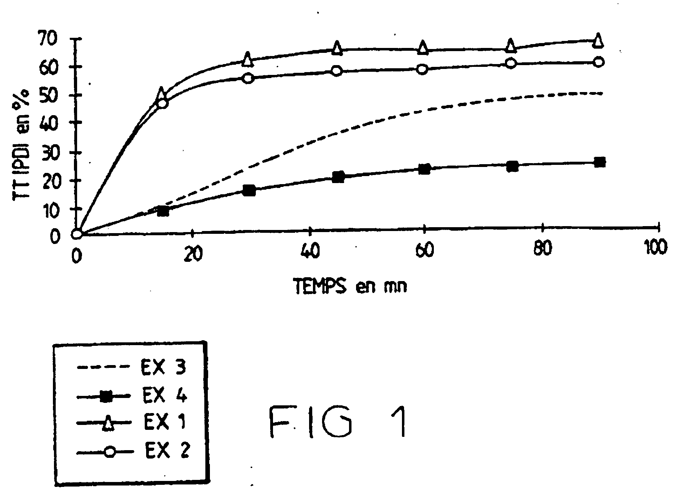

Les cinétiques de trimérisation sont représentées à la figure annexée.

L'effet de l'imidazole sur la vitesse initiale de transformation est spectaculaire, les temps de réaction nécessaires sont divisés par deux (fin de réaction plus lente). Il n'est pas nécessaire de désactiver le catalyseur, ce qui suggérerait une décomposition *in situ.*

## Revendications

1. Utilisation, en tant que catalyseur de réaction de cyclotrimérisation d'isocyanates, d'un système catalytique à base d'un sel d'ammonium quaternaire, en présence, en tant que co-catalyseur, d'imidazole ou d'un de ses dérivés.

2. Utilisation selon la revendication 1, **caractérisée en ce que** le co-catalyseur répond à la formule générale (V) : 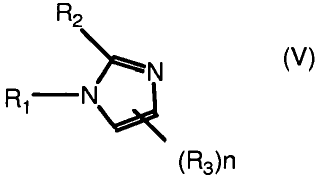 dans laquelle R₁, R₂ et R₃ identiques ou différents sont choisis parmi H, OH, SH, un groupe alkyle en C₁-C₄, hydroxyalkyle en C₁-C₄, aminoalkyle en C₁-C₄, alkylamino en C₁-C₄, dialkylamino (chaque groupe alkyle ayant de 1 à 4 atomes de carbone), alkylthio en C₁-C₄, halogénoalkyle en C₁-C₄, cycloalkyle en C₃-C₈, - aryle en C₅-C₁₀, (aryl en C₅-C₁₀) - alkyle en C₁-C₄, (alkyl en C₁-C₄) - aryle en C₅-C₁₀, hétérocyclique dont l'hétérocycle comprend de 2 à 10 atomes de carbone et de 1 à 4 hétéroatomes identiques ou différents choisis parmi O, S et N et le groupe NR₄, R₄ étant alkyle en C₁-C₄ ou cycloalkyle en C₃-C₈ et n est égal à 0, 1 ou 2.

3. Utilisation selon la revendication 2, **caractérisée en ce que** le co-catalyseur répond à la formule générale (V) : 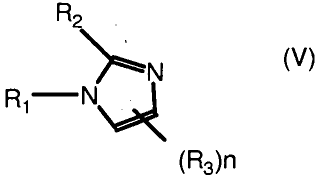 dans laquelle R₁ représente l'atome d'hydrogène, R₂ et R₃, identiques ou différents sont choisis parmi H, OH, SH, un groupe alkyle en C₁-C₄, hydroxyalkyle en C₁-C₄, aminoalkyle en C₁-C₄, alkylamino en C₁-C₄, dialkylamino (chaque groupe alkyle ayant de 1 à 4 atomes de carbone), alkylthio en C₁-C₄, halogénoalkyle en C₁-C₄, cycloalkyle en C₃-C₈, aryle en C₅-C₁₀, (aryl en C₅-C₁₀) - alkyle en C₁-C₄, (alkyl en C₁-C₄) - aryle en C₅-C₁₀, hétérocyclique dont l'hétérocycle comprend de 2 à 10 atomes de carbone et de 1 à 4 hétéroatomes identiques ou différents choisis parmi O, S et N et le groupe NR₄, R₄ étant alkyle en C₁-C₄ ou cycloalkyle en C₃-C₈ et n est égal à 0, 1 ou 2.

4. Utilisation selon la revendication 2, **caractérisée en ce que** le co-catalyseur répond à la formule générale (V) : 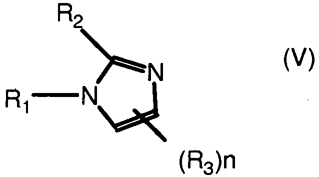 dans laquelle R₁ et R₂ représentent chacun l'atome d'hydrogène, et R₃ est choisi parmi H, OH, SH, un groupe alkyle en C₁-C₄, hydroxyalkyle en C₁-C₄, aminoalkyle en C₁-C₄, alkylamino en C₁-C₄, dialkylamino (chaque groupe alkyle ayant de 1 à 4 atomes de carbone), alkylthio en C₁-C₄, halogénoalkyle en C₁-C₄, cycloalkyle en C₃-C₈, aryle en C₅-C₁₀, (aryl en C₅-C₁₀) - alkyle en C₁-C₄, (alkyl en C₁-C₄) - aryle en C₅-C₁₀, hétérocyclique dont l'hétérocycle comprend de 2 à 10 atomes de carbone et de 1 à 4 hétéroatomes identiques ou différents choisis parmi O, S et N et le groupe NR₄, R₄ étant alkyle en C₁-C₄ ou cycloalkyle en C₃-C₈ et n est égal à 0, 1 ou 2.

5. Utilisation selon la revendication 2, **caractérisée en ce que** le co-catalyseur répond à la formule générale (V) : 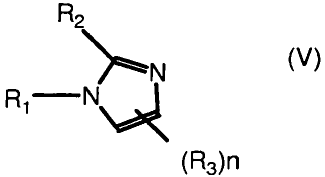 dans laquelle R₁, R₂ et R₃ représentent chacun l'atome d'hydrogène.

6. Utilisation selon l'une quelconque des revendications précédentes, dans laquelle le catalyseur de réaction de cyclotrimérisation d'isocyanates est un hydroxyde d'un hydroxyalkylammonium quaternaire.

7. Utilisation selon l'une quelconque des revendications 1 à 5, dans laquelle le catalyseur de réaction de cyclotrimérisation d'isocyanates est un hydrogénocarbonate d'un cation qui,
- soit en tant que tel,
- soit sous forme complexée avec un agent complexant,
a un rayon ionique ou moléculaire moyen supérieur à 1 Å, et qui est au moins partiellement soluble dans le milieu réactionnel.

8. Utilisation selon l'une quelconque des revendications précédentes, **caractérisée en ce que** les isocyanates sont des isocyanates aliphatiques et/ou cycloaliphatiques.

9. Utilisation selon l'une quelconque des revendications précédentes, **caractérisée en ce que** les isocyanates sont choisis parmi l'isophorone di-isocyanate, le norbornane di-isocyanate et le di-isocyanate de 4,4'-dicyclohexylméthanedi-yle, seuls ou en mélange avec d'autres di-isocyanates.

10. Utilisation selon l'une quelconque des revendications précédentes, **caractérisée en ce que** la quantité de catalyseur est de 100 ppm à 300 ppm (exprimé en poids) par rapport à l'isocyanate monomère.

11. Utilisation selon l'une quelconque des revendications précédentes, **caractérisée en ce que** la quantité de co-catalyseur est de 400 ppm à 800 ppm (exprimé en poids) par rapport à l'isocyanate monomère.

12. Utilisation selon l'une quelconque des revendications précédentes, pour la préparation du trimère de l'isophorone di-isocyanate ou d'un trimère mixte d'isophorone di-isocyanate et d'hexaméthylène di-isocyanate dans lequel la proportion d'hexaméthylène di-isocyanate varie de 5 à 95 % en poids.

13. Utilisation selon l'une quelconque des revendications 1 à 11, pour la préparation du trimère de norbornane di-isocyanate ou d'un trimère mixte de norbornane di-isocyanate et d'hexaméthylène di-isocyanate dans lequel la proportion d'hexaméthylène di-isocyanate varie de 5 à 95 % en poids.

14. Utilisation selon l'une quelconque des revendications 1 à 11, pour la préparation du trimère de di-isocyanate de 4,4'-dicyclohexylméthanediyle ou d'un trimère mixte de di-isocyanate de 4,4'-dicyclohexylméthanediyle et d'hexaméthylène di-isocyanate dans lequel la proportion d'hexaméthylène di-isocyanate varie de 5 à 95 % en poids.

15. Utilisation selon l'une quelconque des revendications précédentes, **caractérisée en ce que** le cation répond à la formule générale I : 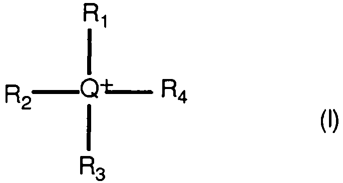 dans laquelle :
Q représente un atome d'azote, de phosphore ou de soufre ; et
R₁, R₂, R₃ et R₄ identiques ou différents désignent des groupes alkyles, éventuellement hydroxylés, ayant 1 à 20 atomes de carbone, des restes cycloalkyles ayant de 4 à 15 atomes de carbone, éventuellement substitués avec des groupes hydroxyles, des restes aralkyles ayant 7 à 15 atomes de carbone, éventuellement substitués avec des groupes hydroxyles ou des restes aryles ayant 6 à 15 atomes de carbone, éventuellement substitués avec des groupes hydroxyles ou bien lorsque Q est N, deux des restes R₁, R₂, R₃ ou R₄ peuvent aussi former avec l'atome d'azote et, le cas échéant, avec un hétéro-atome oxygène ou azote, un noyau hétérocyclique ayant 4 à 6 atomes de carbone, ou bien lorsque Q est N, les restes R₁, R₂ et R₃ représentent chacun des restes éthylènes qui forment en association avec l'atome quaternaire d'azote et un autre atome tertiaire d'azote, un squelette de triéthylènediamine bicyclique,
ou l'un de R₁ à R₄ représente un groupe 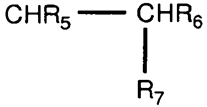 dans lequel R₅, R₆ et R₇ identiques ou différents représentent l'hydrogène, un groupe OH, un groupe alkyle ayant 1 à 12 atomes de carbone, un groupe cycloalkyle ayant 5 à 7 atomes de carbone, un groupe alkényle ayant de 2 à 15 atomes de carbone, un groupe alkynyle ayant de 3 à 6 atomes de carbone, un groupe hydroxyalkyle ayant de 1 à 9 atomes de carbone, un groupe aralkyle ayant de 7 à 10 atomes de carbone, un groupe aryle ayant de 6 à 10 atomes de carbone ou un groupe R₈-O-(CH₂)ₙ dans lequel R₈ est l'hydrogène, un reste alkyle ayant de 1 à 12 atomes de carbone, un reste cycloalkyle ayant de 4 à 10 atomes de carbone, un reste aralkyle ayant de 7 à 10 atomes de carbone ou un reste aryle ayant de 6 à 10 atomes de carbone ; et n est un nombre entier allant de 1 à 6 ; R₇ pouvant en outre également représenter un groupe OCOR₉, R₉ étant un groupe alkyle en C₁-C₆.

16. Utilisation selon la revendication 15, **caractérisée en ce que** le cation répond à la formule générale (II) suivante : 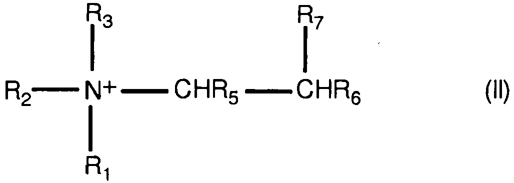 dans laquelle :
* R₁, R₂ et R₃ représentent des restes identiques ou différents et désignent des groupes alkyles, éventuellement hydroxylés, ayant 1 à 20 atomes de carbone, des restes cycloalkyles ayant de 4 à 15 atomes de carbone, éventuellement substitués avec des groupes hydroxyles, des restes aralkyles ayant 7 à 15 atomes de carbone, éventuellement substitués avec des groupes hydroxyles ou des restes aryles ayant 6 à 15 atomes de carbone, éventuellement substitués avec des groupes hydroxyles, deux des restes R₁, R₂ ou R₃ pouvant aussi former avec l'atome d'azote et, le cas échéant, avec un hétéro-atome oxygène ou azote un noyau hétérocyclique ayant 4 à 6 atomes de carbone, ou bien les restes R₁, R₂ et R₃ représentent chacun des restes éthylènes qui forment en association avec l'atome quaternaire d'azote et un autre atome tertiaire d'azote, un squelette de triéthylènediamine bicyclique, et
* R₅, R₆ et R₇ identiques ou différents représentent l'hydrogène, un groupe OH, un groupe alkyle ayant 1 à 12 atomes de carbone, un groupe cycloalkyle ayant 5 à 7 atomes de carbone, un groupe alkényle ayant de 2 à 15 atomes de carbone, un groupe alkynyle ayant de 3 à 6 atomes de carbone, un groupe hydroxyalkyle ayant de 1 à 9 atomes de carbone, un groupe aralkyle ayant de 7 à 10 atomes de carbone, un groupe aryle ayant de 6 à 10 atomes de carbone ou un groupe R₈-O-(CH₂)ₙ dans lequel R₈ est l'hydrogène, un reste alkyle ayant de 1 à 12 atomes de carbone, un reste cycloalkyle ayant de 4 à 10 atomes de carbone, un reste aralkyle ayant de 7 à 10 atomes de carbone ou un reste aryle ayant de 6 à 10 atomes de carbone ; et n est un nombre entier allant de 1 à 6 ; R₇ pouvant en outre également représenter un groupe OCOR₉, R₉ étant un groupe alkyle en C₁-C₆.

17. Utilisation selon la revendication 15 ou la revendication 16, **caractérisée en ce que** :
- R₁, R₂ et R₃ représentent un groupe méthyle,
- R₅ représente H, OH, le groupe méthyle ou le groupe hydroxyméthyle,
- R₆ représente H, OH, le groupe méthyle ou le groupe hydroxyméthyle,
- R₇ représente H, OH, le groupe méthyle, le groupe hydroxyméthyle ou le groupe acétyle.

18. Utilisation selon la revendication 15 ou la revendication 16, **caractérisée en ce que** :
- R₁, R₂ et R₃ identiques ou différents représentent un groupe alkyle en C₁-C₄,
- R₅ représente H ou un groupe alkyle en C₁-C₄,
- R₆ représente H, OH ou un groupe alkyle en C₁-C₄,
- R₇ représente H, OH, un groupe alkyle en C₁-C₄ ou le groupe acétyle, sans que le total des atomes de carbone de R₁ à R₇ n'excède 8.

19. Utilisation selon la revendication 15 ou la revendication 16, **caractérisée en ce qu'**au moins un des trois groupes de R₁ à R₃ représentent le groupe méthyle, R₅, R₆ et R₇ et un seul de R₅ à R₇ étant OH.

20. Utilisation selon la revendication 15 ou la revendication 16, **caractérisée en ce que** R₁ à R₃ représentent un groupe alkyle en C₁-C₄, un groupe hydroxyalkyle en C₁-C₄, et R₅ à R₇ représentent H ou OH, lesdits composés comportant un seul groupe OH en position oméga par rapport à l'atome d'azote central.

21. Utilisation selon la revendication 15 ou la revendication 16, **caractérisée en ce que** le composé est l'hydrogénocarbonate de choline.

22. Utilisation selon la revendication 15 ou la revendication 16, **caractérisée en ce que** le catalyseur est sous forme solide obtenue par dépôt de l'hydrogénocarbonate sur un minéral ou fixation covalente sur une résine.

23. Procédé de préparation de polyisocyanates (poly)isocyanurates par cyclotrimérisation catalytique d'isocyanates dans lequel on utilise, en tant que catalyseur, un système catalytique à base d'un sel d'ammonium quaternaire, en présence, en tant que co-catalyseur, d'imidazole ou un de ses dérivés.

24. Procédé selon la revendication 23, **caractérisé en ce que** le co-catalyseur répond à la formule générale V : 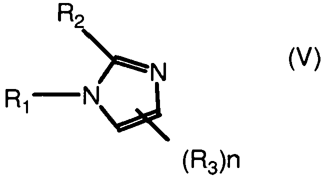 dans laquelle R₁, R₂ et R₃ identiques ou différents sont choisis parmi H, OH, SH, un groupe alkyle en C₁-C₄, hydroxyalkyle en C₁-C₄, aminoalkyle en C₁-C₄, alkylamino en C₁-C₄, dialkylamino (chaque groupe alkyle ayant de 1 à 4 atomes de carbone), alkylthio en C₁-C₄, halogénoalkyle en C₁-C₄, cycloalkyle en C₃-C₈, - aryle en C₅-C₁₀, (aryl en C₅-C₁₀) - alkyle en C₁-C₄, (alkyl en C₁-C₄)-aryle en C₅-C₁₀, hétérocyclique dont l'hétérocycle comprend de 2 à 10 atomes de carbone et de 1 à 4 hétéroatomes identiques ou différents choisis parmi O, S et N et le groupe NR₄, R₄ étant alkyle en C₁-C₄ ou cycloalkyle en C₃-C₈ et n est égal à 0, 1 ou 2.

25. Procédé selon la revendication 24, **caractérisé en ce que** le co-catalyseur répond à la formule générale V : 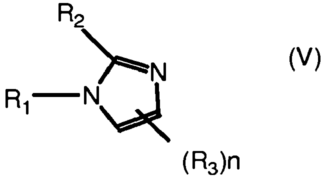 dans laquelle R₁ représente l'atome d'hydrogène, R₂ et R₃, identiques ou différents sont choisis parmi H, OH, SH, un groupe alkyle en C₁-C₄, hydroxyalkyle en C₁-C₄, aminoalkyle en C₁-C₄, alkylamino en C₁-C₄, dialkylamino (chaque groupe alkyle ayant de 1 à 4 atomes de carbone), alkylthio en C₁-C₄, halogénoalkyle en C₁-C₄, cycloalkyle en C₃-C₈, - aryle en C₅-C₁₀, (aryl en C₅-C₁₀) - alkyle en C₁-C₄, (alkyl en C₁-C₄) - aryle en C₅-C₁₀, hétérocyclique dont l'hétérocycle comprend de 2 à 10 atomes de carbone et de 1 à 4 hétéroatomes identiques ou différents choisis parmi O, S et N et le groupe NR₄, R₄ étant alkyle en C₁-C₄ ou cycloalkyle en C₃-C₈ et n est égal à 0, 1 ou 2.

26. Procédé selon la revendication 24, **caractérisé en ce que** le co-catalyseur répond à la formule générale V : 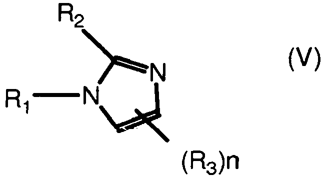 dans laquelle R₁ et R₂ représentent chacun l'atome d'hydrogène, et R₃ est choisi parmi H, OH, SH, un groupe alkyle en C₁-C₄, hydroxyalkyle en C₁-C₄, aminoalkyle en C₁-C₄, alkylamino en C₁-C₄, dialkylamino (chaque groupe alkyle ayant de 1 à 4 atomes de carbone), alkylthio en C₁-C₄, halogénoalkyle en C₁-C₄, cycloalkyle en C₃-C₈, - aryle en C₅-C₁₀, (aryl en C₅-C₁₀) - alkyle en C₁-C₄, (alkyl en C₁-C₄) - aryle en C₅-C₁₀, hétérocyclique dont l'hétérocycle comprend de 2 à 10 atomes de carbone et de 1 à 4 hétéroatomes identiques ou différents choisis parmi O, S et N et le groupe NR₄, R₄ étant alkyle en C₁-C₄ ou cycloalkyle en C₃-C₈ et n est égal à 0, 1 ou 2.

27. Procédé selon la revendication 24, **caractérisé en ce que** le co-catalyseur répond à la formule générale V : 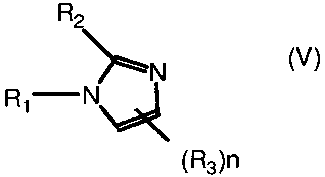 dans laquelle R₁, R₂ et R₃ représentent chacun l'atome d'hydrogène.

28. Procédé selon l'une quelconque des revendications 23 à 27, **caractérisé en ce que** le catalyseur de cyclotrimérisation est tel que défini aux revendications 15 à 22.

29. Procédé selon la revendication 28, **caractérisé en ce que** le sel d'ammonium quaternaire est de formule générale : 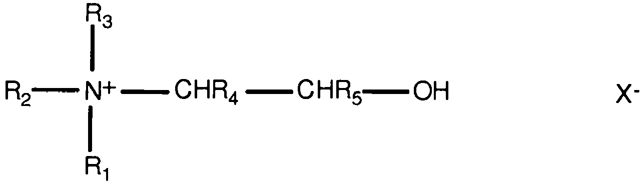 dans laquelle
* R₁, R₂ et R₃ représentent des restes identiques ou différents et désignent des groupes alkyles, éventuellement hydroxylés, ayant 1 à 20 atomes de carbone, des restes cycloalkyles ayant de 4 à 15 atomes de carbone, éventuellement substitués avec des groupes hydroxyles, des restes aralkyles ayant 7 à 15 atomes de carbone, éventuellement substitués avec des groupes hydroxyles ou des restes aryles ayant 6 à 15 atomes de carbone, éventuellement substitués avec des groupes hydroxyles, deux des restes R₁, R₂ ou R₃ pouvant aussi former avec l'atome d'azote et, le cas échéant, avec un hétéro-atome oxygène ou un azote un noyau hétérocyclique ayant 4 à 6 atomes de carbone, ou bien les restes R₁, R₂ et R₃ représentant chacun des restes éthylènes qui forment en association avec l'atome quaternaire d'azote et un autre atome tertiaire d'azote, un squelette de triéthylènediamine bicyclique, et
* R₄ et R₅ identiques ou différents représentent l'hydrogène et/ou un groupe alkyle ayant 1 à 12 atomes de carbone, un groupe cycloalkyle ayant 5 à 7 atomes de carbone, un groupe alkényle ayant de 2 à 15 atomes de carbone, un groupe alkényle ayant de 3 à 6 atomes de carbone, un groupe hydroxyalkyle ayant de 1 à 9 atomes de carbone, un groupe aralkyle ayant de 7 à 10 atomes de carbone, un groupe aryle ayant de 6 à 10 atomes de carbone ou un groupe R₆-O-(CH₂)ₙ dans lequel R₆ est l'hydrogène, un reste alkyle ayant de 1 à 12 atomes de carbone, un reste cycloalkyle ayant de 4 à 10 atomes de carbone, un reste aralkyle ayant de 7 à 10 atomes de carbone ou un reste aryle ayant de 6 à 10 atomes de carbone ; et
n est un nombre entier ayant une valeur de 1 à 6; et
X⁻ représente un anion, choisi parmi OH⁻ et les anions de formule -OOC-(O)ₐ-Y dans laquelle Y est choisi parmi
un atome d'hydrogène,
un groupe alkyle ayant de 1 à 20 atomes de carbone,
un groupe alkényle ayant de 2 à 15 atomes de carbone,
un groupe cycloalkyle ayant de 3 à 6 atomes de carbone,
un groupe phényle,
un groupe alkylphényle ayant de 1 à 9 atomes de carbone dans le reste alkyle ou dans les groupes liés au noyau phényle,
un groupe benzyle,
un groupe alkylbenzyle ayant de 1 à 9 atomes de carbone dans le reste alkyle ou dans les groupes liés au noyau benzyle, et
un groupe CH_{(3-b)}Z_{(b)} dans lequel b est un nombre entier de 1 à 3 et Z est OH, CN, Cl, un groupe alkoxy de 1 à 5 atomes de carbone, ou un groupe phényle ou méthoxyphényle, ou
Z est (CH₂)_{d}COOR dans lequel d est un nombre entier de 0 à 4 et R est un atome d'hydrogène ou un groupe alkyle ayant jusqu'à 20 atomes de carbone,
et a est égal à zéro ou 1.

30. Procédé selon la revendication 28, **caractérisé en ce que** le sel d'ammonium quaternaire est la choline.

31. Procédé selon l'une des revendications 23 à 30, **caractérisé en ce que** que la quantité de catalyseur est de 100 ppm à 300 ppm par rapport à l'isocyanate monomère.

32. Procédé selon l'une quelconque des revendications 23 à 31, **caractérisé en ce que** la quantité de co-catalyseur est de 400 ppm à 800 ppm par rapport à l'isocyanate monomère.

33. Composition de poly-isocyanates (poly)isocyanurates obtenue par cyclotrimérisation d'isocyanates seuls ou en mélange par utilisation d'un catalyseur et d'un co-catalyseur, telle que définie dans l'une quelconque des revendications 1 à 22.

34. Composition de poly-isocyanates (poly)isocyanurates obtenue par cyclotrimérisation d'isocyanates, seuls ou en mélange, selon le procédé défini dans l'une quelconque des revendications 23 à 32.

35. Composition selon la revendication 34 comprenant les produits de réaction de l'isocyanate monomère et/ou trimère avec l'imidazole ou un de ses dérivés.

36. Composition de poly-isocyanates (poly)isocyanurates dans laquelle la composition est un produit de réaction d'un isocyanate monomère et/ou trimère avec un co-catalyseur qui est l'imidazole ou un de ses dérivés correspondant à la formule générale (V), en présence d'un système catalytique à base d'un sel d'ammonium quaternaire : 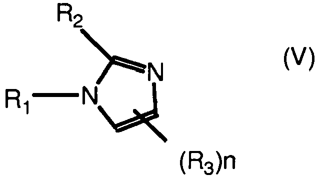 dans laquelle R₁, R₂ et R₃ identiques ou différents sont choisis parmi H, OH, SH, un groupe alkyle en C₁-C₄, hydroxyalkyle en C₁-C₄, aminoalkyle en C₁-C₄, alkylamino en C₁-C₄, dialkylamino (chaque groupe alkyle ayant de 1 à 4 atomes de carbone), alkylthio en C₁-C₄, halogénoalkyle en C₁-C₄, cycloalkyle en C₃-C₈, - aryle en C₅-C₁₀, (aryl en C₅-C₁₀) - alkyle en C₁-C₄, (alkyl en C₁-C₄) - aryle en C₅-C₁₀, hétérocyclique dont l'hétérocycle comprend de 2 à 10 atomes de carbone et de 1 à 4 hétéroatomes identiques ou différents choisis parmi O, S et N et le groupe NR₄, R₄ étant alkyle en C₁-C₄ ou cycloalkyle en C₃-C₈ et n est égal à 0, 1 ou 2.

37. Composition selon la revendication 36, **caractérisée en ce que** le co-catalyseur répond à la formule générale (V) : 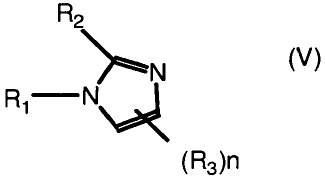 dans laquelle R₁ représente l'atome d'hydrogène, R₂ et R₃, identiques ou différents sont choisis parmi H, OH, SH, un groupe alkyle en C₁-C₄, hydroxyalkyle en C₁-C₄, aminoalkyle en C₁-C₄, alkylamino en C₁-C₄, dialkylamino (chaque groupe alkyle ayant de 1 à 4 atomes de carbone), alkylthio en C₁-C₄, halogénoalkyle en C₁-C₄, cycloalkyle en C₃-C₈, - aryle en C₅-C₁₀, (aryl en C₅-C₁₀) - alkyle en C₁-C₄, (alkyl en C₁-C₄) - aryle en C₅-C₁₀, hétérocyclique dont l'hétérocycle comprend de 2 à 10 atomes de carbone et de 1 à 4 hétéroatomes identiques ou différents choisis parmi O, S et N et le groupe NR₄, R₄ étant alkyle en C₁-C₄ ou cycloalkyle en C₃-C₈ et n est égal à 0, 1 ou 2.

38. Composition selon la revendication 36, **caractérisée en ce que** le co-catalyseur répond à la formule générale (V) : 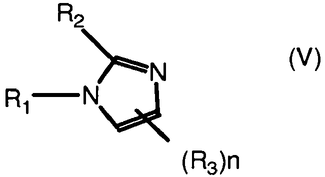 dans laquelle R₁ et R₂ représentent chacun l'atome d'hydrogène, et R₃ est choisi parmi H, OH, SH, un groupe alkyle en C₁-C₄, hydroxyalkyle en C₁-C₄, aminoalkyle en C₁-C₄, alkylamino en C₁-C₄, dialkylamino (chaque groupe alkyle ayant de 1 à 4 atomes de carbone), alkylthio en C₁-C₄, halogénoalkyle en C₁-C₄, cycloalkyle en C₃-C₈, - aryle en C₅-C₁₀, (aryl en C₅-C₁₀) - alkyle en C₁-C₄, (alkyl en C₁-C₄) - aryle en C₅-C₁₀, hétérocyclique dont l'hétérocycle comprend de 2 à 10 atomes de carbone et de 1 à 4 hétéroatomes identiques ou différents choisis parmi O, S et N et le groupe NR₄, R₄ étant alkyle en C₁-C₄ ou cycloalkyle en C₃-C₈ et n est égal à 0, 1 ou 2.

39. Composition selon la revendication 36, **caractérisée en ce que** le co-catalyseur répond à la formule générale (V) : 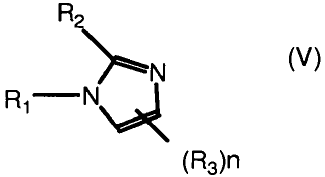 dans laquelle R₁, R₂ et R₃ représentent chacun l'atome d'hydrogène.

## Patentansprüche

1. Verwendung eines katalytischen Systems auf Basis eines quaternären Ammoniumsalzes als Reaktionskatalysator einer Zyklotrimerisierung von Isocyanaten bei Vorhandensein eines Imidazols oder eines seiner Derivate als Co-Katalysator.

2. Verwendung nach Anspruch 1, **dadurch gekennzeichnet, dass** der Co-Katalysator der allgemeinen Formel (V) entspricht: 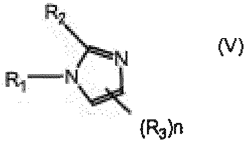 in der R₁, R₂ und R₃, identisch oder unterschiedlich, ausgewählt sind aus H, OH, SH, einer C₁-C₄ Alkyl-, C₁-C₄ Hydroxyalkyl-, C₁-C₄ Amino-alkyl-, C₁-C₄ Alkylamin-, Dialkylamingruppe (jede Alkylgruppe mit 1 bis 4 Kohlenstoffatomen), C₁-C₄ Alkylthio-, C₁-C₄ Halogenalkyl-, C₃-C₈ Cycloalkylgruppe, - C₅-C₁₀ Aryl, (C₅-C₁₀ Aryl) - C₁-C₄ Alkyl, (C₁-C₄ Alkyl) - C₅-C₁₀ Aryl, heterozyklisch, deren Heterozyklus 2 bis 10 Kohlenstoffatome und 1 bis 4 identische oder unterschiedliche Heteroatome, ausgewählt aus O, S und N umfasst, und der Gruppe NR₄, wobei R₄ ein C₁-C₄ Alkyl oder ein C₃-C₈ Cycloalkyl ist, und n gleich 0, 1 oder 2 ist.

3. Verwendung nach Anspruch 2, **dadurch gekennzeichnet, dass** der Co-Katalysator der allgemeinen Formel (V) entspricht: 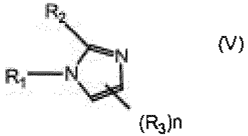 in der R₁ ein Wasserstoffatom darstellt, R₇ und R₃, identisch oder unterschiedlich, ausgewählt sind aus H, OH, SH, einer C₁-C₄ Alkyl-, C₁-C₄ Hydroxyalkyl-, C₁-C₄ Aminoalkyl-, C₁-C₄ Alkylamin-, Dialkylamingruppe (jede Alkylgruppe mit 1 bis 4 Kohlenstoffatomen), C₁-C₄ Alkylthio-, C₁-C₄ Halogenalkyl-, C₃-C₈ Cycloalkyl-, C₅-C₁₀ Arylgruppe, (C₅-C₁₀ Aryl) - C₁-C₄ Alkyl, (C₁-C₄ Alkyl) - C₅-C₁₀ Aryl, heterozyklisch, deren Heterozyklus 2 bis 10 Kohlenstoffatome und 1 bis 4 identische oder unterschiedliche Heteroatome, ausgewählt aus O, S und N umfasst, und der Gruppe NR₄, wobei R₄ ein C₁-C₄ Alkyl oder ein C₃-C₈ Cycloalkyl ist, und n gleich 0, 1 oder 2 ist.

4. Verwendung nach Anspruch 2, **dadurch gekennzeichnet, dass** der Co-Katalysator der allgemeinen Formel (V) entspricht: 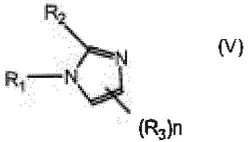 in der R₁ und R₂ jeweils ein Wasserstoffatom darstellen und R₃ ausgewählt ist aus H, OH, SH, einer C₁-C₄ Alkyl-, C₁-C₄ Hydroxyalkyl-, C₁-C₄ Aminoalkyl-, C₁-C₄ Alkylamin-, Dialkylamingruppe (jede Alkylgruppe mit 1 bis 4 Kohlenstoffatomen), C₁-C₄ Alkylthio-, C₁-C₄ Halogenalkyl-, C₃-C₈ Cycloalkyl-, C₅-C₁₀ Arylgruppe, (C₅-C₁₀ Aryl) - C₁-C₄ Alkyl, (C₁-C₄ Alkyl)-C₅-C₁₀ Aryl, heterozyklisch, deren Heterozyklus 2 bis 10 Kohlenstoff-atome und 1 bis 4 identische oder unterschiedliche Heteroatome, ausgewählt aus O, S und N umfasst, und der Gruppe NR₄, wobei R₄ ein C₁-C₄ Alkyl oder ein C₃-C₈ Cycloalkyl ist, und n gleich 0, 1 oder 2 ist.

5. Verwendung nach Anspruch 2, **dadurch gekennzeichnet, dass** der Co-Katalysator der allgemeinen Formel (V) entspricht: 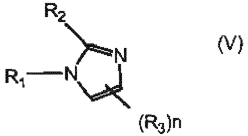 in der R₁, R₂ und R₃ jeweils ein Wasserstoffatom darstellen.

6. Verwendung nach einem der vorhergehenden Ansprüche, bei der der Reaktionskatalysator der Zyklotrimerisierung von Isocyanaten ein Hydroxid eines quaternären Hydroxyalkylammoniums ist.

7. Verwendung nach einem beliebigen der Ansprüche 1 bis 5, bei der der Reaktionskatalysator der Zyklotrimerisierung von Isocyanaten ein Hydrogencarbonat eines Kations ist, das
- sei es ein solches,
- sei es in komplexierter Form mit einem Komplexbildner,
einen mittleren Ionen- oder Molekularradius größer als 1 A hat und das mindestens teilweise in dem Reaktionsmedium lösbar ist.

8. Verwendung nach einem beliebigen der vorhergehenden Ansprüche, **dadurch gekennzeichnet, dass** die Isocyanate aliphatische und/oder cycloaliphatische Isocyanate sind.

9. Verwendung nach einem beliebigen der vorhergehenden Ansprüche, **dadurch gekennzeichnet, dass** die Isocyanate ausgewählt sind aus Isophorondiisocyanat, Norbonandiisocyanat und Diisocyanat von 4,4'-Dicyklohexylmethandiyl, allein oder in einer Mischung mit anderen Diisocyanaten.

10. Verwendung nach einem beliebigen der vorhergehenden Ansprüche, **dadurch gekennzeichnet, dass** die Katalysatormenge zwischen 100 ppm und 300 ppm (ausgedrückt als Gewicht) in Bezug auf das monomere Isocyanat ist.

11. Verwendung nach einem beliebigen der vorhergehenden Ansprüche, **dadurch gekennzeichnet, dass** die Menge des Co-Katalysators zwischen 400 ppm und 800 ppm (ausgedrückt als Gewicht) in Bezug auf das monomere Isocyanat liegt.

12. Verwendung nach einem beliebigen der vorhergehenden Ansprüche für die Herstellung des Isophorondiisocynattrimers oder eines gemischten Trimers aus Isophorondiisocyanat und Hexamethylendiisocyanat, in dem das Verhältnis von Hexamethylendiisocyanat zwischen 5 bis 95 Ges.-% variiert.

13. Verwendung nach einem beliebigen der Ansprüche 1 bis 11 für die Herstellung des Norbornandiisocyanattrimers oder eines gemischten Trimers aus Norbonandiisocyanat und Hexamethylendiisocyanat, in dem das Verhältnis von Hexamethylendiisocyanat von 5 bis 95 Gew.-% variiert.

14. Verwendung nach einem beliebigen der Ansprüche 1 bis 11 für die Herstellung des Diisocyanattrimers von 4,4'-Dicyklohexylmethandiyl oder eines gemischten Trimers aus Diisocyanat von 4,4'-Dicyklohexylmethanediyl und Hexamethylendiisocyanat, bei dem das Verhältnis von Hexamethylendiisocyanat von 5 bis 95 Gew.-% variiert.

15. Verwendung nach einem beliebigen der vorhergehenden Ansprüche, **dadurch gekennzeichnet, dass** das Kation der allgemeinen Formel I entspricht: 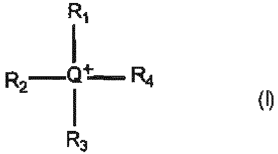 in der:
Q ein Stickstoff-, Phosphor- oder Schwefelatom darstellt; und
R₁, R₂, R₃ und R₄, identisch oder unterschiedlich, bezeichnen, Alkylgruppen, gegebenenfalls hydroxyliert, mit 1 bis 20 Kohlenstoffatomen, Cycloalkylreste mit 4 bis 15 Kohlenstoffatomen,gegebenenfalls mit Hydroxylgruppen substituiert, Aralkylreste mit 7 bis 15 Kohlenstoffatomen, gegebenenfalls substituiert mit Hydroxylgruppen oder Arylresten mit 6 bis 15 Kohlenstoffatomen, gegebenenfalls substituiert mit Hydroxylgruppen oder wenn Q gleich N ist, zwei der Reste R₁, R₂, R₃ und R₄ auch mit dem Stickstoffatom und gegebenenfalls mit einem Sauerstoffheteroatom oder Stickstoffheteroatom einen heterozyklischen Kern mit 4 bis 6 Kohlenstoffatomen bilden können oder wenn Q gleich N ist, die Reste R₁, R₂, und R₃ jeweils Ethylenreste darstellen, die unter Verbindung mit dem quaternären Stickstoffatom und einem anderen tertiären Stickstoffatom eingehen ein bizyklisches Triethylendiaminskelett bilden,
oder eines von R₁ bis R₄ eine Gruppe repräsentiert 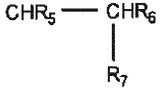 in der R₅, R₆ und R₇, identisch oder unterschiedlich, Wasserstoff, eine OH-Gruppe, eine Alkylgruppe mit 1 bis 12 Kohlenstoffatomen, eine Cycloalkylgruppe mit 5 bis 7 Kohlenstoffatomen, eine Alkenylgruppe mit 2 bis 15 Kohlenstoffatomen, eine Alkinylgruppe mit 3 bis 6 Kohlenstoffatomen, eine Hydroxyalkylgruppe mit 1 bis 9 Kohlenstoffatomen, einer Aralkylgruppe mit 7 bis 10 Kohlenstoffatomen, eine Arylgruppe mit 6 bis 10 Kohlenstoffatomen oder eine R₈-O-(CH₂)ₙ-Gruppe, in der R₈ ein Wasserstoff, ein Alkylrest mit 1 bis 12 Kohlenstoffatomen, ein Cycloalkylrest mit 4 bis 10 Kohlenstoffatomen, ein Aralkylrest mit 7 bis 10 Kohlenstoffatomen oder ein Arylrest mit 6 bis 10 Kohlenstoffatomen ist; und n eine ganze Zahl von 1 bis 6 ist; R₇ außerdem gleichfalls eine OCOR₉-Gruppe darstellen kann, wobei R₉ eine C₁-C₆ Alkylgruppe ist.

16. Verwendung nach Anspruch 15, **dadurch gekennzeichnet, dass** das Kation der folgenden allgemeinen Formel (II) entspricht: 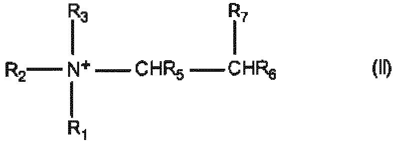 bei der:
* R₁, R₂ und R₃ identische oder unterschiedliche Reste darstellen und Alkylgruppen, gegebenenfalls hydroxyliert, mit 1 bis 20 Kohlenstoffatomen, Cycloalkylreste mit 4 bis 15 Kohlenstoffatomen, gegebenenfalls substituiert mit Hydroxylgruppen, Aralkylreste mit 7 bis 15 Kohlenstoffatomen, gegebenenfalls substituiert mit Hydroxylgruppen oder Arylresten mit 6 bis 15 Kohlenstoffatomen, gegebenenfalls substituiert mit Hydroxylgruppen, bezeichnen, wobei zwei der Reste R₁, R₂ oder R₃ auch mit dem Stickstoffatom und gegebenenfalls mit einem Sauerstoff- oder Stickstoffheteroatom einen heterozyklischen Kern mit 4 bis 6 Kohlenstoffatomen bilden können, oder die Reste R₁, R₂ und R₃ stellen jeweils Ethylenreste dar, die unter Verbindung mit dem quaternären Stickstoffatom und einem anderen tertiären Stickstoffatom ein bizyklisches Triethylendiaminskelett bilden, und
* R₅, R₆ und R₇, identisch oder unterschiedlich, Wasserstoff, eine OH-Gruppe, eine Alkylgruppe mit 1 bis 12 Kohlenstoffatomen, eine Cycloalkylgruppe mit 5 bis 7 Kohlenstoffatomen, eine Alkenylgruppe mit 2 bis 15 Kohlenstoffatomen, eine Alkinylgruppe mit 3 bis 6 Kohlenstoffatomen, eine Hydroxyalkylgruppe mit 1 bis 9 Kohlenstoffatomen, eine Aralkylgruppe mit 7 bis 10 Kohlenstoffatomen, eine Arylgruppe mit 6 bis 10 Kohlenstoffatomen oder eine R₈-O-(CH₂)ₙ-Gruppe, bei der R₈ Wasserstoff ist, einen Alkylrest mit 1 bis 12 Kohlenstoffatomen, einen Cycloalkylrest mit 4 bis 10 Kohlenstoffatomen, einen Aralkylrest mit 7 bis 10 Kohlenstoffatomen oder einen Arylrest mit 6 bis 10 Kohlenstoffatomen darstellen; und n eine ganze Zahl von 1 bis 6 ist; R₇ außerdem gleichfalls eine Gruppe OCOR₉ darstellen kann, wobei R₉ eine C₁-C₆-Alkylgruppe ist.

17. Verwendung nach Anspruch 15 oder Anspruch 16, **dadurch gekennzeichnet, dass**:
- R₁, R₂ und R₃ eine Methylgruppe darstellen,
- R₅ H, OH, die Methylgruppe oder die Hydroxymethylgruppe darstellt,
- R₆ H, OH, die Methylgruppe oder die Hydroxymethylgruppe darstellt,
- R₇ H, OH, die Methylgruppe, die Hydroxymethylgruppe oder die Acetylgruppe darstellt.

18. Verwendung nach Anspruch 15 oder Anspruch 16, **dadurch gekennzeichnet, dass**:
- R₁, R₂ und R₃, identisch oder unterschiedlich, eine C₁-C₄ Alkylgruppe darstellen,
- R₅ H oder eine C₁-C₄ Alkylgruppe darstellt,
- R₆ H, OH oder eine C₁-C₄ Alkylgruppe darstellt,
- R₇ H, OH, eine C₁-C₄ Alkylgruppe oder die Acetylgruppe darstellt, ohne dass die Gesamtheit der Kohlenstoffatome von R₁ bis R₇ 8 überschreitet.

19. Verwendung nach Anspruch 15 oder Anspruch 16, **dadurch gekennzeichnet, dass** mindestens eine der drei Gruppen R₁ bis R₃ die Methylgruppe darstellt, wobei R₅, R₆ und R₇ und ein einziges von R₅ bis R₇ OH ist.

20. Verwendung nach Anspruch 15 oder Anspruch 16, **dadurch gekennzeichnet, dass** R₁ bis R₃ eine C₁-C₄ Alkylgruppe, eine C₁-C₄ Hydroxyalkylgruppe darstellen und R₅ bis R₇ H oder OH darstellen, wobei die Verbindungen eine einzige OH-Gruppe in Omega-Position in Bezug auf das zentrale Stickstoffatom aufweisen.

21. Verwendung nach Anspruch 15 oder Anspruch 16, **dadurch gekennzeichnet, dass** die Verbindung Cholinhydrogencarbonat ist.

22. Verwendung nach Anspruch 15 oder Anspruch 16, **dadurch gekennzeichnet, dass** der Katalysator eine feste Form aufweist, die durch Ablagerung von Hydrogencarbonat auf einem Mineral oder eine kovalente Bindung an einem Harz erhalten wird.

23. Verfahren zur Herstellung von Polyisocyanaten (Poly)isocyanuraten durch katalytische Zyklotrimerisierung von Isocyanaten, bei der als Katalysator ein katalytisches System auf der Basis eines quaternären Ammoniumsalzes bei Vorhandensein eines Imidazols oder eines seiner Derivate als Co-Katalysator verwendet wird.

24. Verfahren nach Anspruch 23, **dadurch gekennzeichnet, dass** der Co-Katalysator der allgemeinen Formel V entspricht: 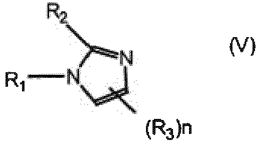 in der R₁, R₂ und R₃, identisch oder unterschiedlich, ausgewählt sind aus H, OH, SH, einer C₁-C₄ Alkyl-, C₁-C₄ Hydroxyalkyl-, C₁-C₄ Aminoalkyl-, C₁-C₄ Alkylamin-, Dialkylamingruppe (jede Alkylgruppe mit 1 bis 4 Kohlenstoffatomen), C₁-C₄ Alkylthio-, C₁-C₄ Halogenalkyl-, C₃-C₈ Cycloalkylgruppe, - C₅-C₁₀ Aryl, (C₅-C₁₀ Aryl) - C₁-C₄ Alkyl, (C₁-C₄ Alkyl) - C₅-C₁₀ Aryl, heterozyklisch, deren Heterozyklus 2 bis 10 Kohlenstoffatome und 1 bis 4 identische oder unterschiedliche Heteroatome, ausgewählt aus O, S und N umfasst, und der Gruppe NR₄, wobei R₄ ein C₁-C₄ Alkyl oder ein C₃-C₈ Cycloalkyl ist, und n gleich 0, 1 oder 2 ist.

25. Verfahren nach Anspruch 24, **dadurch gekennzeichnet, dass** der Co-Katalysator der allgemeinen Formel V entspricht: 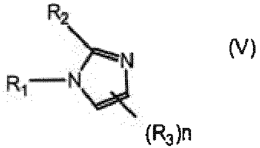 in der R₁ ein Wasserstoffatom darstellt, R₂ und R₃, identisch oder unterschiedlich, ausgewählt sind aus H, OH, SH, einer C₁-C₄ Alkyl-, C₁-C₄ Hydroxyalkyl-, C₁-C₄ Aminoalkyl-, C₁-C₄ Alkylamin-, Dialkylamingruppe (jede Alkylgruppe mit 1 bis 4 Kohlenstoffatomen) C₁-C₄ Alkylthio-, C₁-C₄ Halogenalkyl-, C₃-C₈ Cycloalkyl-, C₅-C₁₀ Arylgruppe, (C₅-C₁₀ Aryl) - C₁-C₄ Alkyl, (C₁-C₄ Alkyl) - C₅-C₁₀ Aryl, heterozyklisch, deren Heterozyklus 2 bis 10 Kohlenstoffatome und 1 bis 4 identische oder unterschiedliche Heteroatome, ausgewählt aus O, S und N umfasst, und der Gruppe NR₄, wobei R₄ ein C₁-C₄ Alkyl oder ein C₃-C₈ Cycloalkyl ist, und n gleich 0, 1 oder 2 ist.

26. Verfahren nach Anspruch 24, **dadurch gekennzeichnet, dass** der Co-Katalysator der allgemeinen Formel V entspricht: 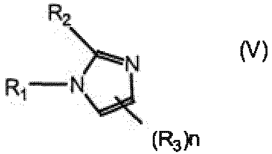 in der R₁ und R₂ jeweils ein Wasserstoffatom darstellen und R₃ ausgewählt ist aus H, OH, SH, einer C₁-C₄ Alkyl-, C₁-C₄ Hydroxyalkyl-, C₁-C₄ Aminoalkyl-, C₁-C₄ Alkylamin-, Dialkylamingruppe (jede Alkylgruppe mit 1 bis 4 Kohlenstoffatomen), C₁-C₄ Alkylthio-, C₁-C₄ Halogenalkyl-, C₃-C₈ Cycloalkyl-, C₅-C₁₀ Arylgruppe, (C₅-C₁₀ Aryl) - C₁-C₄ Alkyl, (C₁-C₄ Alkyl)-C₅-C₁₀ Aryl, heterozyklisch, deren Heterozyklus 2 bis 10 Kohlenstoffatome und 1 bis 4 identische oder unterschiedliche Heteroatome, ausgewählt aus 0, S und N umfasst, und der Gruppe NR₄, wobei R₄ ein C₁-C₄ Alkyl oder ein C₃-C₈ Cycloalkyl ist, und n gleich 0, 1 oder 2 ist.

27. Verfahren nach Anspruch 24, **dadurch gekennzeichnet, dass** der Co-Katalysator der allgemeinen Formel V entspricht: 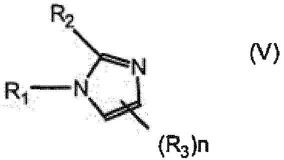 in der R₁, R₂ und R₃ jeweils ein Wasserstoffatom darstellen.

28. Verfahren nach einem beliebigen der Ansprüche 23 bis 27, **dadurch gekennzeichnet, dass** der Zyklotrimerisierungskatalysator derart ausgebildet ist, wie er in den Ansprüchen 15 bis 22 definiert ist.

29. Verfahren nach Anspruch 28, **dadurch gekennzeichnet, dass** das quaternäre Ammoniumsalz die allgemeine Formel aufweist: 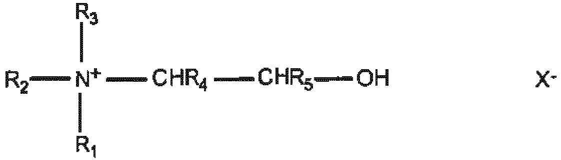 bei der
* R₁, R₂ und R₃ identische oder unterschiedliche Reste darstellen und Alkylgruppen, gegebenenfalls hydroxyliert, mit 1 bis 20 Kohlenstoffatomen, Cycloalkylreste mit 4 bis 15 Kohlenstoffatomen, gegebenenfalls substituiert mit Hydroxylgruppen, Aralkylreste mit 7 bis 15 Kohlenstoffatomen, gegebenenfalls substituiert mit Hydroxylgruppen oder Arylreste mit 6 bis 15 Kohlenstoffatomen, gegebenenfalls substituiert mit Hydroxylgruppen, bezeichnen, wobei zwei der Reste R₁, R₂ oder R₃ auch mit dem Stickstoffatom und gegebenenfalls mit einem Sauerstoff- oder Stickstoffheteroatom einen heterozyklischen Kern mit 4 bis 6 Kohlenstoffatomen bilden können, oder die Reste R₁, R₂ und R₃ jeweils Ethylenreste darstellen, die unter Verbindung mit dem quaternären Stickstoffatom und einem anderen tertiären Stickstoffatom ein bizyklisches Triethylendiaminskelett bilden, und
* R₄ und R₅, identisch oder unterschiedlich, Wasserstoff und/oder eine Alkylgruppe mit 1 bis 12 Kohlenstoffatomen, eine Cycloalkylgruppe mit 5 bis 7 Kohlenstoffatomen, eine Alkenylgruppe mit 2 bis 15 Kohlenstoffatomen, eine Alkenylgruppe mit 3 bis 6 Kohlenstoffatomen, eine Hydroxyalklgruppe mit 1 bis 9 Kohlenstoffatomen, eine Aralkylgruppe mit 7 bis 10 Kohlenstoffatomen, eine Arylgruppe mit 6 bis 10 Kohlenstoffatomen oder eine R₆-O-(CH₂)ₙ-Gruppe, bei der R₆ Wasserstoff ist, einen Alkylrest mit 1 bis 12 Kohlenstoffatomen, einen Cycloalkylrest mit 4 bis 10 Kohlenstoffatomen, einen Aralkylrest mit 7 bis 10 Kohlenstoffatomen oder einen Arylrest mit 6 bis 10 Kohlenstoffatomen darstellen; und
n eine ganze Zahl von 1 bis 6 ist; und
X⁻ ein Anion darstellt, ausgewählt aus OH⁻ und den Anionen der Formel ⁻OOC-(O)ₐ-Y, wobei Y ausgewählt ist aus
einem Wasserstoffatom,
einer Alkylgruppe mit 1 bis 20 Kohlenstoffatomen,
eine Alkenylgruppe mit 2 bis 15 Kohlenstoffatomen,
einer Cycloalkylgruppe mit 3 bis 6 Kohlenstoffatomen,
einer Phenylgruppe,
einer Alkylphenylgruppe mit 1 bis 9 Kohlenstoffatomen im Alkylrest oder in den Gruppen, die an den Phenylkern gebunden sind,
eine Benzylgruppe,
eine Alkylbenzylgruppe mit 1 bis 9 Kohlenstoffatomen in dem Alkylrest oder in den Gruppen, die an den Benzylkern gebunden sind, und eine Gruppe CH_{(3-b)}Z_{(b)}, bei der b eine Ganze Zahl von 1 bis 3 ist und Z OH, CN, CI, eine Alkoxygruppe mit 1 bis 5 Kohlenstoffatomen oder eine Phenyl- oder Methoxyphenylgruppe ist, oder
Z (CH₂)_{d}COOR ist, wobei d eine ganze Zahl zwischen 0 und 4 ist und R ein Wasserstoffatom oder eine Alkylgruppe ist, die bis zu 20 Kohlenstoffatome haben kann,
und a gleich null oder 1 ist.

30. Verfahren nach Anspruch 28, **dadurch gekennzeichnet, dass** das quaternäre Ammoniumsalz Cholin ist.

31. Verfahren nach einem der Ansprüche 23 bis 30, **dadurch gekennzeichnet, dass** die Menge des Katalysators 100 ppm bis 300 ppm in Bezug auf das monomere Isocyanat beträgt.

32. Verfahren nach einem beliebigen der Anspräche 23 bis 31, **dadurch gekennzeichnet, dass** die Menge des Co-Katalysators zwischen 400 ppm und 800 ppm in Bezug auf das Monomerisozyanat beträgt.

33. Zusammensetzung von Poly-Isocyanaten (Poly)isocyanuraten, die durch Zyklotrimerisierung von Isocyanaten allein oder in Mischung durch die Verwendung eines Katalysators und eines Co-Katalysators erhalten wird, wie in einem der Ansprüche 1 bis 22 definiert.

34. Zusammensetzung von Poly-Isocyanaten (Poly)isocyanuraten, die durch Zyklotrimerisierung von Isocyanaten, allein oder in Mischung, nach dem Verfahren, wie es in einem beliebigen der Ansprüche 23 bis 32 definiert ist, erhalten wurden.

35. Zusammensetzung nach Anspruch 34, enthaltend die Reaktionsprodukte des monomeren und/oder trimeren Isocyanats mit Imidazol oder eines seiner Derivate.

36. Zusammensetzung von Poly-Isocyanaten (Poly)isocyanuraten, bei der die Zusammensetzung ein Reaktionsprodukt eines monomeren und/oder trimeren Isocyanats mit einem Co-Katalysator ist, der Imidazol oder eines seiner Derivate entsprechend der allgemeinen Formel (V) ist, bei Vorhandensein eines katalytischen Systems auf der Basis eines quaternären Ammoniumsalzes: 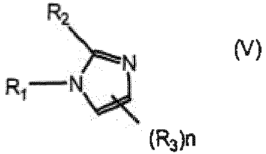 in der R₁, R₂ und R₃, identisch oder unterschiedlich, ausgewählt sind aus H, OH, SH, einer C₁-C₄ Alkyl-, C₁-C₄ Hydroxyalkyl-, C₁-C₄ Aminoalkyl-, C₁-C₄ Alkylamin-, Dialkylamingruppe (jede Alkylgruppe mit 1 bis 4 Kohlenstoffatomen), C₁-C₄ Alkylthio-, C₁-C₄ Halogenalkyl-, C₃-C₈ Cycloalkylgruppe, - C₅-C₁₀ Aryl, (C₅-C₁₀ Aryl) - C₁-C₄ Alkyl, (C₁-C₄ Alkyl) - C₅-C₁₀ Aryl, heterozyklisch, deren Heterozyklus 2 bis 10 Kohlenstoffatome und 1 bis 4 identische oder unterschiedliche Heteroatome, ausgewählt aus O, S und N umfasst, und der Gruppe NR₄, wobei R₄ ein C₁-C₄ Alkyl oder ein C₃-C₈ Cycloalkyl ist, und n gleich 0, 1 oder 2 ist.

37. Zusammensetzung nach Anspruch 36, **dadurch gekennzeichnet, dass** der Co-Katalysator der allgemeinen Formel (V) entspricht: 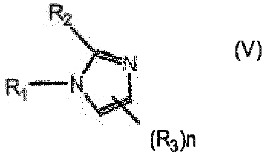 in der R₁ ein Wasserstoffatom darstellt, R₂ und R₃, identisch oder unterschiedlich, ausgewählt sind aus H, OH, SH, einer C₁-C₄ Alkyl-, C₁-C₄ Hydroxylalkyl-, C₁-C₄ Aminoalkyl-, C₁-C₄ Alkylamin-, Dialkylamingruppe (jede Alkylgruppe mit 1 bis 4 Kohlenstoffatomen) C₁-C₄ Alkylthio-, C₁-C₄ Halogenalkyl-, C₃-C₈ Cycloalkyl-, C₅-C₁₀ Arylgruppe, (C₅-C₁₀ Aryl) - C₁-C₄ Alkyl, (C₁-C₄ Alkyl) - C₅-C₁₀ Aryl, heterozyklisch, deren Heterozyklus 2 bis 10 Kohlenstoffatome und 1 bis 4 identische oder unterschiedliche Heteroatome, ausgewählt aus 0, S und N umfasst, und der Gruppe NR₄, wobei R₄ ein C₁-C₄ Alkyl oder ein C₃-C₈ Cycloalkyl ist, und n gleich 0, 1 oder 2 ist.

38. Zusammensetzung nach Anspruch 36, **dadurch gekennzeichnet, dass** der Co-Katalysator der allgemeinen Formel (V) entspricht: 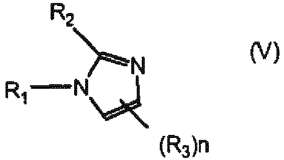 in der R₁ und R₂ jeweils ein Wasserstoffatom darstellen und R₃ ausgewählt ist aus H, OH, SH, einer C₁-C₄ Alkyl-, C₁-C₄ Hydroxyalkyl-, C₁-C₄ Aminoalkyl-, C₁-C₄ Alkylamin-, Dialkylamingruppe (jede Alkylgruppe mit 1 bis 4 Kohlenstoffatomen), C₁-C₄ Alkylthio-, C₁-C₄ Halogenalkyl-, C₃-C₈ Cycloalkyl-, C₅-C₁₀ Arylgruppe, (C₅-C₁₀ Aryl) - C₁-C₄ Alkyl, (C₁-C₄ Alkyl)-C₅-C₁₀ Aryl, heterozyklisch, deren Heterozyklus 2 bis 10 Kohlenstoffatome und 1 bis 4 identische oder unterschiedliche Heteroatome, ausgewählt aus O, S und N umfasst, und der Gruppe NR₄, wobei R₄ ein C₁-C₄ Alkyl oder ein C₃-C₈ Cycloalkyl ist, und n gleich 0, 1 oder 2 ist.

39. Zusammensetzung nach Anspruch 36, **dadurch gekennzeichnet, dass** der Co-Katalysator der allgemeinen Formel (V) entspricht: 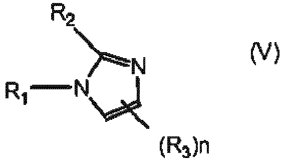 in der R₁, R₂ und R₃ jeweils ein Wasserstoffatom darstellen.

## Claims

1. Use, as a reaction catalyst for cyclotrimerisation of isocyanates, of a catalytic system based on a quaternary ammonium salt, in the presence of, as co-catalyst, imidazole or a derivative thereof.

2. Use according to claim 1, **characterised in that** the co-catalyst corresponds to general formula (V): 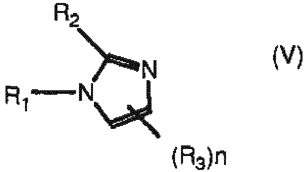 wherein R₁, R₂ and R₃, which are the same or different, are selected from H, OH, SH, a C₁-C₄alkyl, C₁-C₄hydroxyalkyl, amino-C₁-C₄alkyl, C₁-C₄alkylamino, dialkylamino (each alkyl group having from 1 to 4 carbon atoms), C₁-C₄alkylthio, C₁-C₄haloalkyl, C₃-C₈cycloalkyl, C₅-C₁₀aryl, (C₅-C₁₀aryl)-C₁-C₄alkyl, (C₁-C₄alkyl)-C₅-C₁₀aryl, and heterocyclic group, wherein the heterocycle comprises from 2 to 10 carbon atoms and from 1 to 4 hetero atoms, which are the same or different, selected from O, S and N, and the group NR₄, R₄ being C₁-C₄alkyl or C₃-C₈cycloalkyl, and n is 0, 1 or 2.

3. Use according to claim 2, **characterised in that** the co-catalyst corresponds to general formula (V): 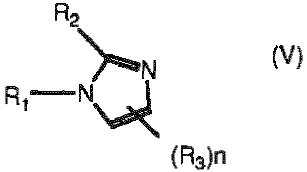 wherein R₁ represents a hydrogen atom, R₂ and R₃, which are the same or different, are selected from H, OH, SH, a C₁-C₄alkyl, C₁-C₄hydroxyalkyl, amino-C₁-C₄alkyl, C₁-C₄alkylamino, dialkylamino (each alkyl group having from 1 to 4 carbon atoms), C₁-C₄alkylthio, C₁-C₄haloalkyl, C₃-C₈cycloalkyl, C₅-C₁₀aryl, (C₅-C₁₀aryl)-C₁-C₄alkyl, (C₁-C₄alkyl)-C₅-C₁₀aryl, and heterocyclic group, wherein the heterocycle comprises from 2 to 10 carbon atoms and from 1 to 4 hetero atoms, which are the same or different, selected from O, S and N, and the group NR₄, R₄ being C₁-C₄alkyl or C₃-C₈cycloalkyl, and n is 0, 1 or 2,

4. Use according to claim 2, **characterised in that** the co-catalyst corresponds to general formula (V): 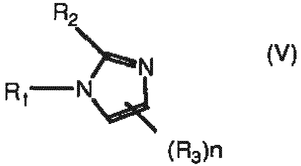 wherein R₁ and R₂ each represent a hydrogen atom, and R₃ is selected from H, OH, SH, a C₁-C₄alkyl, C₁-C₄hydroxyalkyl, amino-C₁-C₄alkyl, C₁-C₄alkylamino, dialkylamino (each alkyl group having from 1 to 4 carbon atoms), C₁-C₄alkylthio, C₁-C₄haloalky), C₃-C₈cycloalkyl, C₅-C₁₀aryl, (C₅-C₁₀aryl)-C₁-C₄alkyl, (C₁-C₄alkyl)-C₅-C₁₀aryl, and heterocyclic group, wherein the heterocycle comprises from 2 to 10 carbon atoms and from 1 to 4 hetero atoms, which are the same or different, selected from O, S and N, and the group NR₄, R₄ being C₁-C₄alkyl or C₃-C₈cycloalkyl, and n is 0, 1 or 2.

5. Use according to claim 2, **characterised in that** the co-catalyst corresponds to general formula (V): 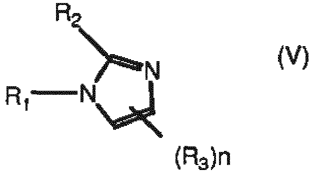 wherein R₁, R₂ and R₃ each represent a hydrogen atom.

6. Use according to any one of the preceding claims, wherein the reaction catalyst for cyclotrimerisation of isocyanates is a hydroxide of a quaternary hydroxyalkylammonium.

7. Use according to any one of claims 1 to 5, wherein the reaction catalyst for cyclotrimerisation of isocyanates is a hydrogen carbonate of a cation which,
- either as such
- or in complexed form with a complexing agent,
has an ionic or molecular radius greater than 1 A and which is at least partially soluble in the reaction medium.

8. Use according to any one of the preceding claims, **characterised in that** the isocyanates are aliphatic and/or cycloaliphatic isocyanates.

9. Use according to any one of the preceding claims, **characterised in that** the isocyanates are selected from isophorone diisocyanate, norbornane diisocyanate and 4,4'-dicyclohexylmethanediyl diisocyanate, alone or in admixture with other diisocyanates.

10. Use according to any one of the preceding claims, **characterised in that** the amount of catalyst is from 100 ppm to 300 ppm (expressed in terms of weight) relative to the isocyanate monomer.

11. Use according to any one of the preceding claims, **characterised in that** the amount of co-catalyst is from 400 ppm to 800 ppm (expressed in terms of weight) relative to the isocyanate monomer.

12. Use according to any one of the preceding claims, for the preparation of trimer of isophorone diisocyanate or a mixed trimer of isophorone diisocyanate and hexamethylene diisocyanate in which the proportion of hexamethylene diisocyanate varies from 5 to 95 % by weight.

13. Use according to any one of claims 1 to 11, for the preparation of trimer of norbornane diisocyanate or a mixed trimer of norbornane diisocyanate and hexamethylene diisocyanate in which the proportion of hexamethylene diisocyanate varies from 5 to 95 % by weight.

14. Use according to any one of claims 1 to 11, for the preparation of trimer of 4,4'-dicyclohexylmethanediyl diisocyanate or a mixed trimer of 4,4'-dicyclohexyl-methanediyl diisocyanate and hexamethylene diisocyanate in which the proportion of hexamethylene diisocyanate varies from 5 to 95 % by weight.

15. Use according to any one of the preceding claims, **characterised in that** the cation corresponds to general formula I: 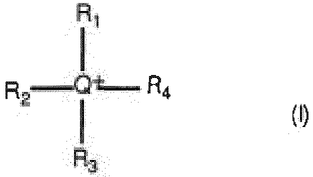 wherein:
Q represents a nitrogen, phosphorus or sulfur atom; and
R₁, R₂, R₃ and R₄, which are the same or different, denote optionally hydroxylated alkyl groups having 1 to 20 carbon atoms, cycloalkyl radicals having from 4 to 15 carbon atoms, optionally substituted by hydroxyl groups, aralkyl radicals having 7 to 15 carbon atoms, optionally substituted by hydroxyl groups, or aryl radicals having 6 to 15 carbon atoms, optionally substituted by hydroxyl groups or, when Q is N, two of the radicals R₁, R₂, R₃ or R₄ can also form with the nitrogen atom and, where applicable, with an oxygen or nitrogen hetero atom, a heterocyclic ring arrangement having 4 to 6 carbon atoms, or, when Q is N, the radicals R₁, R₂ and R₃ each represent ethylene radicals which form, in association with the quaternary nitrogen atom and another tertiary nitrogen atom, a bicyclic triethylenediamine skeleton,
or one of R₁ to R₄ represents a group 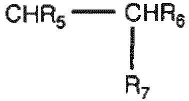 wherein R₅, R₆ and R₇, which are the same or different, represent hydrogen, an OH group, an alkyl group having 1 to 12 carbon atoms, a cycloalkyl group having 5 to 7 carbon atoms, an alkenyl group having from 2 to 15 carbon atoms, an alkynyl group having from 3 to 6 carbon atoms, a hydroxyalkyl group having from 1 to 9 carbon atoms, an aralkyl group having from 7 to 10 carbon atoms, an aryl group having from 6 to 10 carbon atoms or a group R₈-O-(CH₂)ₙ wherein R₈ is hydrogen, an alkyl radical having from 1 to 12 carbon atoms, a cycloalkyl radical having from 4 to 10 carbon atoms, an aralkyl radical having from 7 to 10 carbon atoms or an aryl radical having from 6 to 10 carbon atoms; and n is an integer ranging from 1 to 6; it also being possible for R₇ furthermore to represent a group OCOR₉, R₉ being a C₁-C₆alkyl group.

16. Use according to claim 15, **characterised in that** the cation corresponds to the following general formula (II): 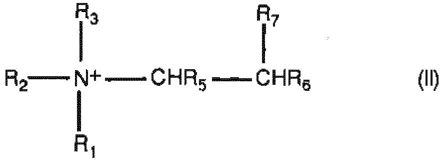 wherein:
* R₁, R₂ and R₃ represent the same or different radicals and denote optionally hydroxylated alkyl groups having 1 to 20 carbon atoms, cycloalkyl radicals having from 4 to 15 carbon atoms, optionally substituted by hydroxyl groups, aralkyl radicals having 7 to 15 carbon atoms, optionally substituted by hydroxyl groups, or aryl radicals having 6 to 15 carbon atoms, optionally substituted by hydroxyl groups, it also being possible for two of the radicals R₁, R₂ or R₃ to form with the nitrogen atom and, where applicable, with an oxygen or nitrogen hetero atom, a heterocyclic ring arrangement having 4 to 6 carbon atoms, or the radicals R₁, R₂ and R₃ each represent ethylene radicals which form, in association with the quaternary nitrogen atom and another tertiary nitrogen atom, a bicyclic triethylenediamine skeleton, and
* R₅, R₆ and R₇, which are the same or different, represent hydrogen, an OH group, an alkyl group having 1 to 12 carbon atoms, a cycloalkyl group having 5 to 7 carbon atoms, an alkenyl group having from 2 to 15 carbon atoms, an alkynyl group having from 3 to 6 carbon atoms, a hydroxyalkyl group having from 1 to 9 carbon atoms, an aralkyl group having from 7 to 10 carbon atoms, an aryl group having from 6 to 10 carbon atoms or a group R₈-O-(CH₂)ₙ wherein R₈ is hydrogen, an alkyl radical having from 1 to 12 carbon atoms, a cycloalkyl radical having from 4 to 10 carbon atoms, an aralkyl radical having from 7 to 10 carbon atoms or an aryl radical having from 6 to 10 carbon atoms; and n is an integer ranging from 1 to 6; it also being possible for R₇ furthermore to represent a group OCOR₉, R₉ being a C₁-C₆alkyl group.

17. Use according to claim 15 or claim 16, **characterised in that**:
- R₁, R₂ and R₃ represent a methyl group,
- R₅ represents H, OH, a methyl group or a hydroxymethyl group,
- R₆ represents H, OH, a methyl group or a hydroxymethyl group,
- R₇ represents H, OH, a methyl group, a hydroxymethyl group or an acetyl group.

18. Use according to claim 15 or claim 16, **characterised in that**:
- R₁, R₂ and R₃, which are the same or different, represent a C₁-C₄alkyl group,
- R₅ represents H, OH or a C₁-C₄alkyl group,
- R₆ represents H, OH or a C₁-C₄alkyl group,
- R₇ represents H, OH, a C₁-C₄alkyl group or an acetyl group,
the total carbon atoms of R₁ to R₇ not exceeding 8.

19. Use according to claim 15 or claim 16, **characterised in that** at least one of the three groups R₁ to R₃ represents a methyl group, R₅, R₆ and R₇ and just one of R₅ to R₇ being OH.

20. Use according to claim 15 or claim 16, **characterised in that** R₁ to R₃ represent a C₁-C₄alkyl group, a C₁-C₄hydroxyalkyl group, and R₅ to R₇ represent H or OH, said compounds having just one OH group in the omega position relative to the central nitrogen atom.

21. Use according to claim 15 or claim 16, **characterised in that** the compound is choline hydrogen carbonate.

22. Use according to claim 15 or claim 16, **characterised in that** the catalyst is in a solid form obtained by deposition of the hydrogen carbonate on a mineral or by covalent attachment to a resin.

23. Process for the preparation of (poly)isocyanurate polyisocyanates by catalytic cyclotrimerisation of isocyanates, wherein there is used, as catalyst, a catalytic system based on a quaternary ammonium salt, in the presence of, as co-catalyst, imidazole or a derivative thereof.

24. Process according to claim 23, **characterised in that** the co-catalyst corresponds to general formula V: 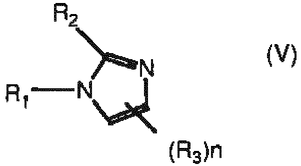 wherein R₁, R₂ and R₃, which are the same or different, are selected from H, OH, SH, a C₁-C₄alkyl, C₁-C₄hydroxyalkyl, amino-C₁-C₄alkyl, C₁-C₄alkylamino, dialkylamino (each alkyl group having from 1 to 4 carbon atoms), C₁-C₄alkylthio, C₁-C₄haloalkyl, C₃-C₈cycloalkyl, C₅-C₁₀aryl, (C₅-C₁₀aryl)-C₁-C₄alkyl, (C₁-C₄alkyl)-C₅-C₁₀aryl, and heterocyclic group, wherein the heterocycle comprises from 2 to 10 carbon atoms and from 1 to 4 hetero atoms, which are the same or different, selected from O, S and N, and the group NR₄, R₄ being C₁-C₄alkyl or C₃-C₈cycloalkyl, and n is 0, 1 or 2.

25. Process according to claim 24, **characterised in that** the co-catalyst corresponds to general formula V: 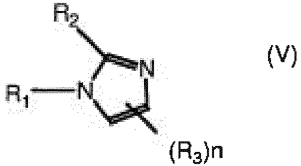 wherein R₁ represents a hydrogen atom, R₂ and R₃, which are the same or different, are selected from H, OH, SH, a C₁-C₄alkyl, C₁-C₄hydroxyalkyl, amino-C₁-C₄alkyl, C₁-C₄alkylamino, dialkylamino (each alkyl group having from 1 to 4 carbon atoms), C₁-C₄alkylthio, C₁-C₄haloalkyl, C₃-C₈cycloalkyl, C₅-C₁₀aryl, (C₅-C₁₀aryl)-C₁-C₄alkyl, (C₁-C₄alkyl)-C₅-C₁₀aryl, and heterocyclic group, wherein the heterocycle comprises from 2 to 10 carbon atoms and from 1 to 4 hetero atoms, which are the same or different, selected from O, S and N, and the group NR₄, R₄ being C₁-C₄alkyl or C₃-C₈cycloalkyl, and n is 0, 1 or 2.

26. Process according to claim 24, **characterised in that** the co-catalyst corresponds to general formula V: 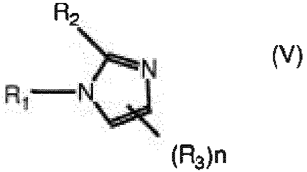 wherein R₁ and R₂ each represent a hydrogen atom, and R₃ is selected from H, OH, SH, a C₁-C₄alkyl, C₁-C₄hydroxyalkyl, amino-C₁-C₄alkyl, C₁-C₄alkylamino, dialkylamino (each alkyl group having from 1 to 4 carbon atoms), C₁-C₄alkylthio, C₁-C₄haloalkyl, C₃-C₈cycloalkyl, C₅-C₁₀aryl, (C₅-C₁₀aryl)-C₁-C₄alkyl, (C₁-C₄alkyl)-C₅-C₁₀aryl, and heterocyclic group, wherein the heterocycle comprises from 2 to 10 carbon atoms and from 1 to 4 hetero atoms, which are the same or different, selected from O, S and N, and the group NR₄, R₄ being C₁-C₄alkyl or C₃-C₈cycloalkyl, and n is 0, 1 or 2.

27. Process according to claim 24, **characterised in that** the co-catalyst corresponds to general formula V: 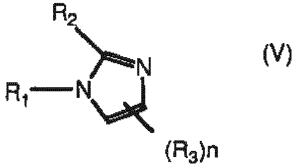 wherein R₁, R₂ and R₃ each represent a hydrogen atom.

28. Process according to any one of claims 23 to 27, **characterised in that** the cyclotrimerisation catalyst is as defined in claims 15 to 22.

29. Process according to claim 28, **characterised in that** the quaternary ammonium salt is of the general formula: 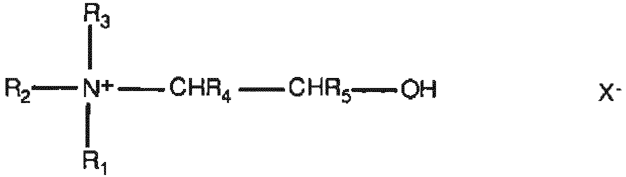 wherein:
* R₁, R₂ and R₃ represent the same or different radicals and denote optionally hydroxylated alkyl groups having 1 to 20 carbon atoms, cycloalkyl radicals having from 4 to 15 carbon atoms, optionally substituted by hydroxyl groups, aralkyl radicals having 7 to 15 carbon atoms, optionally substituted by hydroxyl groups, or aryl radicals having 6 to 15 carbon atoms, optionally substituted by hydroxyl groups, it also being possible for two of the radicals R₁, R₂ or R₃ to form with the nitrogen atom and, where applicable, with an oxygen or nitrogen hetero atom, a heterocyclic ring arrangement having 4 to 6 carbon atoms, or the radicals R₁, R₂ and R₃ each represent ethylene radicals which form, in association with the quaternary nitrogen atom and another tertiary nitrogen atom, a bicyclic triethylenediamine skeleton,
and
* R₄ and R₅, which are the same or different, represent hydrogen and/or an alkyl group having 1 to 12 carbon atoms, a cycloalkyl group having 5 to 7 carbon atoms, an alkenyl group having from 2 to 15 carbon atoms, an alkenyl group having from 3 to 6 carbon atoms, an alkynyl group having from 3 to 6 carbon atoms, a hydroxyalkyl group having from 1 to 9 carbon atoms, an aralkyl group having from 7 to 10 carbon atoms, an aryl group having from 6 to 10 carbon atoms or a group R₆-O-(CH₂)ₙ wherein R₆ is hydrogen, an alkyl radical having from 1 to 12 carbon atoms, a cycloalkyl radical having from 4 to 10 carbon atoms, an aralkyl radical having from 7 to 10 carbon atoms or an aryl radical having from 6 to 10 carbon atoms; and
n is an integer having a value from 1 to 6; and
X⁻ represents an anion selected from OH⁻ and anions of formula ⁻OOC-(O)ₐ-Y wherein Y is selected from
a hydrogen atom,
an alkyl group having from 1 to 20 carbon atoms,
an alkenyl group having from 2 to 15 carbon atoms,
a cycloalkyl group having from 3 to 6 carbon atoms,
a phenyl group,
an alkylphenyl group having from 1 to 9 carbon atoms in the alkyl radical or in the groups attached to the phenyl ring,
a benzyl group,
an alkylbenzyl group having from 1 to 9 carbon atoms in the alkyl radical or in the groups attached to the benzyl ring, and
a group CH_{(3-b)}Z_{(b)} wherein b is an integer from 1 to 3 and Z is OH, CN, Cl, an alkoxy group of 1 to 5 carbon atoms, or a phenyl or methoxyphenyl group, or
Z is (CH₂)_{d}COOR wherein d is an integer from 0 to 4 and R is a hydrogen atom or an alkyl group having up to 20 carbon atoms,
and a is zero or 1.

30. Process according to claim 28, **characterised in that** the quaternary ammonium salt is choline.

31. Process according to one of claims 23 to 30, **characterised in that** the amount of catalyst is from 100 ppm to 300 ppm relative to the isocyanate monomer.

32. Process according to any one of claims 23 to 31, **characterised in that** the amount of co-catalyst is from 400 ppm to 800 ppm relative to the isocyanate monomer,

33. Composition of (poly)isocyanurate polyisocyanates obtained by cyclotrimerisation of isocyanates on their own or in admixture by use of a catalyst and a co-catalyst, as defined in any one of claims 1 to 22.

34. Composition of (poly)isocyanurate polyisocyanates obtained by cyclotrimerisation of isocyanates, on their own or in admixture, in accordance with the process defined in any one of claims 23 to 32.

35. Composition according to claim 34 comprising the reaction products of the isocyanate monomer and/or trimer with imidazole or a derivative thereof.

36. Composition of (poly)isocyanurate polyisocyanates, wherein the composition is a reaction product of an isocyanate monomer and/or trimer with a co-catalyst which is imidazole or a derivative thereof corresponding to general formula (V), in the presence of a catalytic system based on a quaternary ammonium salt: 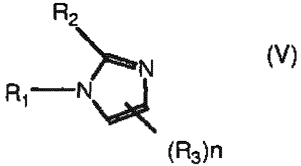 wherein R₁, R₂ and R₃, which are the same or different, are selected from H, OH, SH, a C₁-C₄alkyl, C₁-C₄hydroxyalkyl, amino-C₁-C₄alkyl, C₁-C₄alkylamino, dialkylamino (each alkyl group having from 1 to 4 carbon atoms), C₁-C₄alkylthio, C₁-C₄haloalkyl, C₃-C₈cycloalkyl, C₅-C₁₀aryl, (C₅-C₁₀aryl)-C₁-C₄alkyl, (C₁-C₄alkyl)-C₅-C₁₀aryl, and heterocyclic group, wherein the heterocycle comprises from 2 to 10 carbon atoms and from 1 to 4 hetero atoms, which are the same or different, selected from O, S and N, and the group NR₄, R₄ being C₁-C₄alkyl or C₃-C₈cycloalkyl, and n is 0, 1 or 2.

37. Composition according to claim 36, **characterised in that** the co-catalyst corresponds to general formula (V): 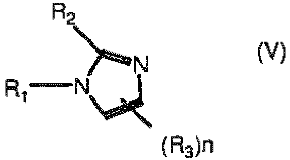 wherein R₁ represents a hydrogen atom, R₂ and R₃, which are the same or different, are selected from H, OH, SH, a C₁-C₄alkyl, C₁-C₄hydroxyalkyl, amino-C₁-C₄alkyl, C₁-C₄alkylamino, dialkylamino (each alkyl group having from 1 to 4 carbon atoms), C₁-C₄alkylthio, C₁-C₄haloalkyl, C₃-C₈cycloalkyl, C₅-C₁₀aryl, (C₅-C₁₀aryl)-C₁-C₄alkyl, (C₁-C₄alkyl)-C₅-C₁₀aryl, and heterocyclic group, wherein the heterocycle comprises from 2 to 10 carbon atoms and from 1 to 4 hetero atoms, which are the same or different, selected from O, S and N, and the group NR₄, R₄ being C₁-C₄alkyl or C₃-C₈cycloalkyl, and n is 0, 1 or 2.

38. Composition according to claim 36, **characterised in that** the co-catalyst corresponds to general formula (V): 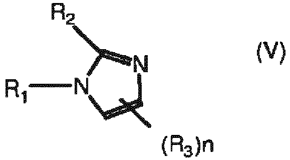 wherein R₁ and R₂ each represent a hydrogen atom, and R₃ is selected from H, OH, SH, a C₁-C₄alkyl, C₁-C₄hydroxyalkyl, amino-C₁-C₄alkyl, C₁-C₄alkylamino, dialkylamino (each alkyl group having from 1 to 4 carbon atoms), C₁-C₄alkylthio, C₁-C₄haloalkyl, C₃-C₈cycloalkyl, C₅-C₁₀aryl, (C₅-C₁₀aryl)-C₁-C₄alkyl, (C₁-C₄alkyl)-C₅-C₁₀aryl, and heterocyclic group, wherein the heterocycle comprises from 2 to 10 carbon atoms and from 1 to 4 hetero atoms, which are the same or different, selected from O, S and N, and the group NR₄, R₄ being C₁-C₄alkyl or C₃-C₈cycloalkyl, and n is 0, 1 or 2.

39. Composition according to claim 36, **characterised in that** the co-catalyst corresponds to general formula (V): 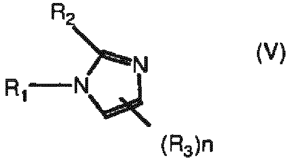 wherein R₁, R₂ and R₃ each represent a hydrogen atom.
